(19)

**Europäisches Patentamt**

**European Patent Office**

**Office européen des brevets**

(11) **EP 4 159 564 B1**

(12) **EUROPEAN PATENT SPECIFICATION**

(45) Date of publication and mention
of the grant of the patent:
**18.06.2025  Bulletin 2025/25**

(21) Application number: **21824973.8**

(22) Date of filing: **29.04.2021**

(51) International Patent Classification (IPC):
*B60W 30/14* (2006.01)        *B60W 60/00* (2020.01)
*B60W 30/095* (2012.01)        *B60W 40/04* (2006.01)
*B60W 30/09* (2012.01)        *B60K 31/00* (2006.01)

(52) Cooperative Patent Classification (CPC):
**B60W 60/0011; B60W 30/09; B60W 30/0956;**
**B60W 30/143; B60W 60/00272; B60W 60/00276;**
B60K 2031/0016; B60K 2031/005;
B60W 2554/4041; B60W 2554/4042;
B60W 2554/4045; B60W 2554/801; B60W 2554/802

(86) International application number:
**PCT/CN2021/090824**

(87) International publication number:
**WO 2021/254000 (23.12.2021 Gazette 2021/51)**

(54) **METHOD AND DEVICE FOR PLANNING VEHICLE LONGITUDINAL MOTION PARAMETERS**

VERFAHREN UND VORRICHTUNG ZUR PLANUNG VON
FAHRZEUGLÄNGSBEWEGUNGSPARAMETERN

PROCÉDÉ ET DISPOSITIF DE PLANIFICATION DE PARAMÈTRES DE MOUVEMENT
LONGITUDINAL DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **16.06.2020  CN 202010545611**

(43) Date of publication of application:
**05.04.2023  Bulletin 2023/14**

(73) Proprietor: **Shenzhen Yinwang Intelligent**
**Technologies Co., Ltd.**
**Shenzhen, Guangdong 518129 (CN)**

(72) Inventors:
• **DU, Mingbo**
**Shenzhen, Guangdong 518129 (CN)**
• **ZHONG, Haiyan**
**Shenzhen, Guangdong 518129 (CN)**

• **TAO, Yongxiang**
**Shenzhen, Guangdong 518129 (CN)**
• **WANG, Jun**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
CN-A- 101 395 647        CN-A- 108 693 878
CN-A- 110 356 394        KR-B1- 101 982 298
US-A1- 2017 369 067      US-A1- 2018 348 777
US-A1- 2019 061 758      US-A1- 2020 156 631
US-A1- 2020 180 636

## Description

This application claims priority to Chinese Patent Application No. 202010545611.X, filed with the China National Intellectual Property Administration on June 16, 2020 and entitled "METHOD AND APPARATUS FOR PLANNING LONGITUDINAL MOTION PARAMETER OF VEHICLE".

## TECHNICAL FIELD

This application relates to the automated driving field, and more specifically, to a method and an apparatus for planning a longitudinal motion parameter of a vehicle.

## BACKGROUND

US2017/369067A1 describes a computer-implemented method for controlling a vehicle system of a host vehicle merging with one or more remote vehicles, including receiving speed data transmitted from the one or more remote vehicles via a vehicular communication network and receiving position data of the one or more remote vehicles from the sensor system of the host vehicle that monitors an area around the host vehicle. It is described that upon determining the one or more remote vehicles are in the area around the host vehicle based on the position data, determining a safe distance for merging into the lane based on a relative position of the host vehicle to the one or more remote vehicles. It is described further, controlling the vehicle system of the host vehicle according to an actual distance between the host vehicle and the one or more remote vehicles and the safe distance.

Artificial intelligence (Artificial Intelligence, AI) is a theory, a method, a technology, and an application system for using a digital computer or a machine controlled by a digital computer to simulate, extend, and expand human intelligence, sense an environment, obtain knowledge, and use the knowledge to obtain an optimal result. In other words, artificial intelligence is a branch of computer science and attempts to understand essence of intelligence and produce a new intelligent machine capable of reacting in a manner similar to that of human intelligence. Artificial intelligence is to study design principles and implementation methods of various intelligent machines to make the machines have perception, inference, and decision-making functions. Studies in the artificial intelligence field include robots, natural language processing, computer vision, decision-making and inference, human-computer interaction, recommendations and searches, basic theories of AI, and the like.

Automated driving is a mainstream application in the artificial intelligence field. An automated driving technology relies on collaboration of computer vision, a radar, a monitoring apparatus, a global positioning system, and the like, to enable a motor vehicle to implement automated driving without a proactive operation of a human. An automated driving vehicle uses various computing systems to help transport a passenger from one position to another position. Some automated driving vehicles may require some initial inputs or continuous inputs from an operator (for example, a pilot, a driver, or a passenger). The automated driving vehicle allows the operator to switch from a manual operation mode to an automated driving mode or a mode between the manual operation mode and the automated driving mode. Because the automated driving technology does not require the motor vehicle to be driven by a human, theoretically, a driving mistake of a human can be effectively avoided, traffic accidents can be reduced, and transportation efficiency of a highway can be improved. Therefore, the automated driving technology attracts increasing attention. For an automated driving vehicle, a path planning and decision-making function is one of the most basic and critical functions. The path planning and decision-making function is intended to adjust a travel policy of a vehicle in a timely and safe manner based on a dynamic change trend of an obstacle around the vehicle in a complex traffic environment. Performing proper planning and decision-making on a longitudinal motion parameter based on a result of predicting an obstacle around a vehicle is a key and difficult issue in a direction of an automated driving technology.

In a conventional solution, a controller first obtains a current state of an automated driving vehicle at a current moment and spatial-temporal prediction data of all obstacles within a preset range. For each of all the obstacles, the controller determines a conflict time and space between each obstacle and the automated driving vehicle, and determines a planned travel trajectory of the automated driving vehicle based on the conflict time and space of each obstacle. Then the controller determines a target longitudinal motion parameter from a planned travel trajectory corresponding to each target object, and sends a control instruction to a control device of the automated vehicle based on the determined target longitudinal motion parameter.

However, in the foregoing process of determining a target velocity curve, the controller needs to determine a standard longitudinal motion parameter of the automated driving vehicle based on the spatial-temporal prediction data of all the obstacles within the preset range, in other words, the controller needs to traverse the spatial-temporal prediction data of all the obstacles within the preset range, and calculate a target longitudinal motion parameter of the automated driving vehicle for each obstacle. As a result, a very large amount of calculation is required for calculating the longitudinal motion parameter.

EP 4 159 564 B1

SUMMARY

This application provides a method and an apparatus for planning a longitudinal motion parameter of a vehicle, to reduce an amount of calculation required for calculating a longitudinal motion parameter of a vehicle.

Appended claim 1 defines a method for planning a longitudinal motion parameter of a vehicle, and where the first aspect described below also defines this method. Appended claim 7 defines an apparatus for planning a longitudinal motion parameter of a vehicle, where the second aspect described below also defines this apparatus. Appended claim 13 defines a computer-readable medium, where the sixth aspect described below also defines this computer-readable medium. Appended claim 14 defines a computer program product, where the fourth aspect described below also defines this computer program product. The invention and its scope of protection is defined by these independent claims, where the dependent claims define embodiments of the invention. The aspects and implementations described below define the invention, as detailed above, and also provide example of combinations of technical subject matters.

According to a first aspect, a method for planning a longitudinal motion parameter of a vehicle is provided, including: detecting a plurality of obstacles located within a preset range of the vehicle; obtaining a time-space domain of each of the plurality of obstacles and a time-space domain of the vehicle, where the time-space domain of each obstacle is used to indicate a change of a position space of each obstacle with time, and the time-space domain of the vehicle is used to indicate a change of a position space occupied by the vehicle with time; determining a spatial-temporal occupy type between the time-space domain of each of the plurality of obstacles and the time-space domain of the vehicle based on an occupy time between the time-space domain of each of the plurality of obstacles and the time-space domain of the vehicle, where the occupy time is used to indicate a time period in which the position space of each of the plurality of obstacles occupies at least a part of a position of the vehicle; selecting a target obstacle from the plurality of obstacles based on the spatial-temporal occupy type; and planning a longitudinal motion parameter of the vehicle based on a spatial-temporal occupy type corresponding to the target obstacle.

In this embodiment of this application, based on the occupy time between the time-space domain of each of the plurality of obstacles and the time-space domain of the vehicle, the spatial-temporal occupy type between the obstacle and the vehicle is determined; the target obstacle is selected from the plurality of obstacles based on the spatial-temporal occupy type; and the longitudinal motion parameter of the vehicle is planned based on the spatial-temporal occupy type corresponding to the target obstacle, thereby avoiding planning a longitudinal motion parameter of a vehicle based on each of a plurality of obstacles in a conventional technology, and helping reduce an amount of calculation required for planning the longitudinal parameter of the vehicle.

It should be noted that, in this embodiment of this application, a longitudinal direction may be understood as a direction that is the same as an axial direction of the vehicle. Therefore, the longitudinal motion parameter may be understood as a motion parameter in the axial direction of the vehicle.

In a possible implementation, if the occupy time is a period of time whose starting moment is a collection moment, the time period corresponding to the occupy time is greater than a first time period threshold, and the collection moment is a moment at which motion states of the plurality of obstacles are collected, the spatial-temporal occupy type between the time-space domain of each of the plurality of obstacles and the time-space domain of the vehicle is a current long-term occupy type; if the time period corresponding to the occupy time is less than a second time period threshold, the spatial-temporal occupy type between the time-space domain of each of the plurality of obstacles and the time-space domain of the vehicle is a temporary occupy type; or if the occupy time is a period of time later than the collection moment, and the time period corresponding to the occupy time is greater than a third time period threshold, the spatial-temporal occupy type between the time-space domain of each of the plurality of obstacles and the time-space domain of the vehicle is a future long-term occupy type, where the first time period threshold is greater than or equal to the second time period threshold, and the third time period threshold is greater than or equal to the second time period threshold.

In this embodiment of this application, spatial-temporal occupy types are classified into the current long-term occupy type, the temporary occupy type, and the future long-term occupy type based on occupy times between time-space domains of obstacles and the time-space domain of the vehicle, so that the longitudinal motion parameter of the vehicle can be planned based on a time-space domain of an obstacle corresponding to each occupy type. This helps improve appropriateness of planning of the longitudinal motion parameter of the vehicle.

In a possible implementation, if the spatial-temporal occupy type is the temporary occupy type, a distance between the target obstacle and the vehicle is shorter than a distance between another obstacle and the vehicle, where the another obstacle is an obstacle other than the target obstacle in the plurality of obstacles; or a time to collision TTC between the target obstacle and the vehicle is shorter than a TTC between the another obstacle and the vehicle.

In this embodiment of this application, an obstacle with a shortest distance from the vehicle or an obstacle with a shortest time to collision in the plurality of obstacles is used as a target obstacle corresponding to the temporary occupy type, to select an obstacle that has large impact on the longitudinal motion parameter of the vehicle from the temporary occupy type. This helps improve safety of planning of the longitudinal motion parameter of the vehicle.

In a possible implementation, if the spatial-temporal occupy type is the current long-term occupy type, a longitudinal distance between the target obstacle and the vehicle is less than a longitudinal distance between another obstacle in the plurality of obstacles and the vehicle.

It should be noted that, in this embodiment of this application, the longitudinal direction may be understood as a direction that is the same as the axial direction of the vehicle. Therefore, the longitudinal distance may be understood as a distance between the obstacle and the vehicle in the axial direction of the vehicle.

In this embodiment of this application, an obstacle with a shortest longitudinal distance from the vehicle in the plurality of obstacles is used as a target obstacle corresponding to the current long-term occupy type, to select an obstacle that has large impact on the longitudinal motion parameter of the vehicle from the current long-term occupy type. This helps improve safety of planning of the longitudinal motion parameter of the vehicle.

In a possible implementation, if the spatial-temporal occupy type is the future long-term occupy type, a time to line TTL between the target obstacle and a lane in which the vehicle travels is shorter than a TTL between another obstacle and the lane, where the another obstacle is an obstacle other than the target obstacle in the plurality of obstacles.

In this embodiment of this application, an obstacle with a shortest TTL from the lane in which the vehicle travels in the plurality of obstacles is used as a target obstacle corresponding to the future long-term occupy type, to select an obstacle that has large impact on the longitudinal motion parameter of the vehicle from the future long-term occupy type. This helps improve safety of planning of the longitudinal motion parameter of the vehicle.

In a possible implementation, the planning a longitudinal motion parameter of the vehicle based on a spatial-temporal occupy type corresponding to the target obstacle includes: determining, based on the spatial-temporal occupy type corresponding to the target obstacle, a first constraint condition corresponding to the spatial-temporal occupy type of the target obstacle, where the first constraint condition is used to constrain the longitudinal motion parameter of the vehicle, to avoid collision between the target obstacle and the vehicle; obtaining a second constraint condition corresponding to another spatial-temporal occupy type, where the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and planning the longitudinal motion parameter of the vehicle based on the first constraint condition and the second constraint condition.

In this embodiment of this application, the first constraint corresponding to the spatial-temporal occupy type of the target obstacle and the second constraint corresponding to the another spatial-temporal occupy type are jointly used as a constraint condition for calculating the longitudinal motion parameter of the vehicle. This helps improve safety of planning of the longitudinal motion parameter of the vehicle.

According to a second aspect, an apparatus for planning a longitudinal motion parameter of a vehicle is provided, including: a detection unit, configured to detect a plurality of obstacles located within a preset range of the vehicle; an obtaining unit, configured to obtain a time-space domain of each of the plurality of obstacles and a time-space domain of the vehicle, where the time-space domain of each obstacle is used to indicate a change of a position space of each obstacle with time, and the time-space domain of the vehicle is used to indicate a change of a position space occupied by the vehicle with time; and a processing unit, configured to determine a spatial-temporal occupy type between the time-space domain of each of the plurality of obstacles and the time-space domain of the vehicle based on an occupy time between the time-space domain of each of the plurality of obstacles and the time-space domain of the vehicle, where the occupy time is used to indicate a time period in which the position space of each of the plurality of obstacles occupies at least a part of a position of the vehicle, the processing unit is further configured to select a target obstacle from the plurality of obstacles based on the spatial-temporal occupy type, and the processing unit is further configured to plan a longitudinal motion parameter of the vehicle based on a spatial-temporal occupy type corresponding to the target obstacle.

In this embodiment of this application, based on the occupy time between the time-space domain of each of the plurality of obstacles and the time-space domain of the vehicle, the spatial-temporal occupy type between the obstacle and the vehicle is determined; the target obstacle is selected from the plurality of obstacles based on the spatial-temporal occupy type; and the longitudinal motion parameter of the vehicle is planned based on the spatial-temporal occupy type corresponding to the target obstacle, thereby avoiding planning a longitudinal motion parameter of a vehicle based on each of a plurality of obstacles in a conventional technology, and helping reduce an amount of calculation required for planning the longitudinal parameter of the vehicle.

In a possible implementation, if the occupy time is a period of time whose starting moment is a collection moment, the time period corresponding to the occupy time is greater than a first time period threshold, and the collection moment is a moment at which motion states of the plurality of obstacles are collected, the spatial-temporal occupy type between the time-space domain of each of the plurality of obstacles and the time-space domain of the vehicle is a current long-term occupy type; if the time period corresponding to the occupy time is less than a second time period threshold, the spatial-temporal occupy type between the time-space domain of each of the plurality of obstacles and the time-space domain of the vehicle is a temporary occupy type; or if the occupy time is a period of time later than the collection moment, and the time period corresponding to the occupy time is greater than a third time period threshold, the spatial-temporal occupy type between the time-space domain of each of the plurality of obstacles and the time-space domain of the vehicle is a future long-term occupy type, where the first time period threshold is greater than or equal to the second time period threshold, and the third time period threshold is greater than or equal to the second time period threshold.

In this embodiment of this application, spatial-temporal occupy types are classified into the current long-term occupy type, the temporary occupy type, and the future long-term occupy type based on occupy times between time-space domains of obstacles and the time-space domain of the vehicle, so that the longitudinal motion parameter of the vehicle can be planned based on a time-space domain of an obstacle corresponding to each occupy type. This helps improve appropriateness of planning of the longitudinal motion parameter of the vehicle.

In a possible implementation, if the spatial-temporal occupy type is the temporary occupy type, a distance between the target obstacle and the vehicle is shorter than a distance between another obstacle and the vehicle, where the another obstacle is an obstacle other than the target obstacle in the plurality of obstacles; or a time to collision TTC between the target obstacle and the vehicle is shorter than a TTC between the another obstacle and the vehicle.

In this embodiment of this application, an obstacle with a shortest distance from the vehicle or an obstacle with a shortest time to collision in the plurality of obstacles is used as a target obstacle corresponding to the temporary occupy type, to select an obstacle that has large impact on the longitudinal motion parameter of the vehicle from the temporary occupy type. This helps improve safety of planning of the longitudinal motion parameter of the vehicle.

In a possible implementation, if the spatial-temporal occupy type is the current long-term occupy type, a longitudinal distance between the target obstacle and the vehicle is less than a longitudinal distance between another obstacle in the plurality of obstacles and the vehicle.

In this embodiment of this application, an obstacle with a shortest longitudinal distance from the vehicle in the plurality of obstacles is used as a target obstacle corresponding to the current long-term occupy type, to select an obstacle that has large impact on the longitudinal motion parameter of the vehicle from the current long-term occupy type. This helps improve safety of planning of the longitudinal motion parameter of the vehicle.

In a possible implementation, if the spatial-temporal occupy type is the future long-term occupy type, a time to line TTL between the target obstacle and a lane in which the vehicle travels is shorter than a TTL between another obstacle and the lane, where the another obstacle is an obstacle other than the target obstacle in the plurality of obstacles.

In this embodiment of this application, an obstacle with a shortest TTL from the lane in which the vehicle travels in the plurality of obstacles is used as a target obstacle corresponding to the future long-term occupy type, to select an obstacle that has large impact on the longitudinal motion parameter of the vehicle from the future long-term occupy type. This helps improve safety of planning of the longitudinal motion parameter of the vehicle.

In a possible implementation, the processing unit is further configured to: determine, based on the spatial-temporal occupy type corresponding to the target obstacle, a first constraint condition corresponding to the spatial-temporal occupy type of the target obstacle, where the first constraint condition is used to constrain the longitudinal motion parameter of the vehicle, to avoid collision between the target obstacle and the vehicle; obtain a second constraint condition corresponding to another spatial-temporal occupy type, where the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and plan the longitudinal motion parameter of the vehicle based on the first constraint condition and the second constraint condition.

In this embodiment of this application, the first constraint corresponding to the spatial-temporal occupy type of the target obstacle and the second constraint corresponding to the another spatial-temporal occupy type are jointly used as a constraint condition for calculating the longitudinal motion parameter of the vehicle. This helps improve safety of planning of the longitudinal motion parameter of the vehicle.

According to a third aspect, a controller is provided. The controller may be various devices with a control function, or may be a chip with a control function. The controller may include a detection unit, a processing unit, and an obtaining unit. The processing unit may be a processor, and the detection unit and the obtaining unit may be an input/output interface. The controller may further include a storage unit. The storage unit may be a memory, and the storage unit is configured to store instructions. The processing unit executes the instructions stored in the storage unit, so that the controller performs the method in the first aspect. The storage unit may be a storage unit (for example, a register or a cache) in the chip, or may be a storage unit (for example, a read-only memory or a random access memory) that is in the controller and that is located outside the chip.

According to a fourth aspect, a computing device is provided. The computing device may be various devices with a computing function, or may be a chip with a computing function. The computing device may include a detection unit, a processing unit, and an obtaining unit. The processing unit may be a processor, and the detection unit and the obtaining unit may be an input/output interface. The computing device may further include a storage unit. The storage unit may be a memory, and the storage unit is configured to store instructions. The processing unit executes the instructions stored in the storage unit, so that the computing device performs the method in the first aspect. The storage unit may be a storage unit (for example, a register or a cache) in the chip, or may be a storage unit (for example, a read-only memory or a random access memory) that is in the computing device and that is located outside the chip.

According to a fifth aspect, a computer program product is provided. The computer program product includes computer program code. When the computer program code is run on a computer, the computer is enabled to perform the methods in the foregoing aspects.

It should be noted that all or some of the computer program code may be stored in a first storage medium, where the first storage medium may be packaged together with a processor, or the first storage medium and the processor may be packaged separately. This is not specifically limited in this application.

According to a sixth aspect, a computer-readable medium is provided. The computer-readable medium stores program code. When the computer program code is run on a computer, the computer is enabled to perform the methods in the foregoing aspects.

## BRIEF DESCRIPTION OF DRAWINGS

FIG. 1 is a schematic diagram of a communication system to which an embodiment of this application is applicable;

FIG. 2 is a schematic diagram of an automated driving system to which an embodiment of this application is applicable;

FIG. 3 is a flowchart of a method for planning a longitudinal motion parameter of a vehicle according to an embodiment of this application;

FIG. 4 shows a spatial-temporal occupy type between a time-space domain of a vehicle and time-space domains of a plurality of obstacles according to an embodiment of this application;

FIG. 5 is a schematic diagram of a method for calculating a longitudinal motion parameter of a vehicle according to an embodiment of this application;

FIG. 6 is a schematic diagram of a method for calculating a longitudinal motion parameter of a vehicle according to another embodiment of this application;

FIG. 7 is a schematic diagram of a method for calculating a longitudinal motion parameter of a vehicle according to another embodiment of this application;

FIG. 8 is a flowchart of a method for planning a longitudinal motion parameter of a vehicle according to an embodiment of this application;

FIG. 9 shows a projection of an obstacle of a future long-term occupy type in a time-space-domain coordinate system according to an embodiment of this application;

FIG. 10 shows a projection of an obstacle of a temporary occupy type in a time-space-domain coordinate system according to an embodiment of this application;

FIG. 11 shows a projection of an obstacle of a current long-term occupy type in a time-space-domain coordinate system according to an embodiment of this application;

FIG. 12 is a displacement-time graph of a target obstacle and a vehicle according to an embodiment of this application;

FIG. 13 is a schematic diagram of an apparatus for planning a longitudinal motion parameter of a vehicle according to an embodiment of this application; and

FIG. 14 is a schematic block diagram of a controller according to another embodiment of this application.

## DESCRIPTION OF EMBODIMENTS

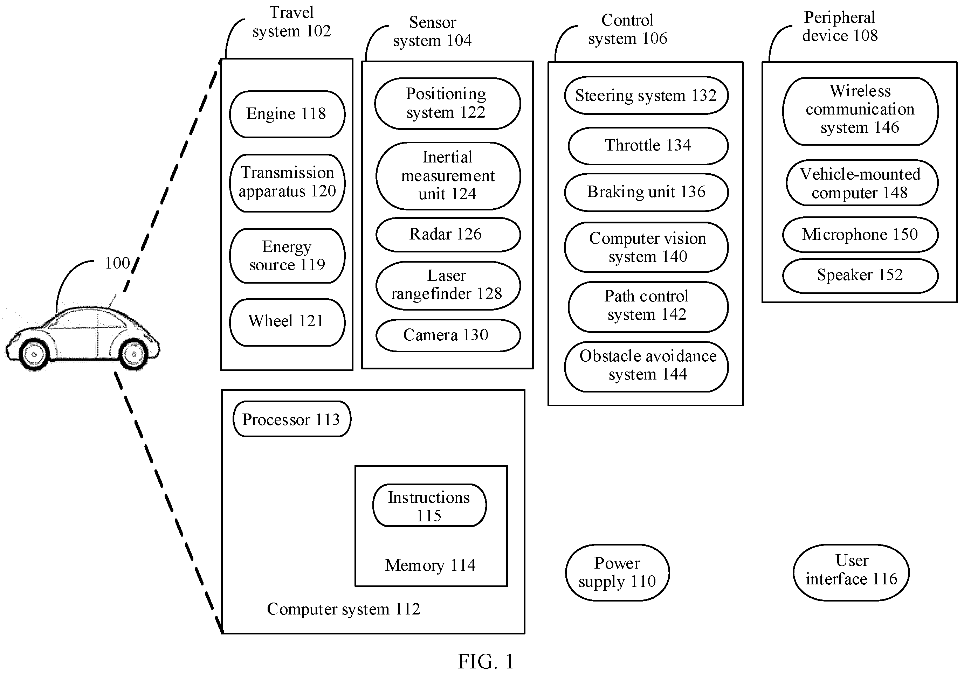

The following describes technical solutions of this application with reference to the accompanying drawings. For ease of understanding, the following first describes, with reference to FIG. 1, a scenario to which embodiments of this application are applicable.

FIG. 1 is a functional block diagram of a vehicle 100 according to an embodiment of this application. In an embodiment, the vehicle 100 is configured to be in a fully or partially automated driving mode. For example, the vehicle 100 may control the vehicle 100 in the automated driving mode, determine a current status of the vehicle and an ambient environment of the vehicle through a manual operation, determine possible behavior of at least one another vehicle in the ambient environment, determine a confidence level corresponding to a possibility of performing the possible behavior by the another vehicle, and control the vehicle 100 based on determined information. When the vehicle 100 is in the automated driving mode, the vehicle 100 may be configured to operate without interacting with a person.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, the subsystems and the elements of the vehicle 100 may be all interconnected in a wired or wireless manner.

The travel system 102 may include a component that provides power for motion of the vehicle 100. In an embodiment, the travel system 102 may include an engine 118, an energy source 119, a transmission apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other petroleum-based fuels, propane, other compressed gas-based fuels, anhydrous alcohol, a photovoltaic module, a battery, and other power sources. The energy source 119 may also provide energy for another system of the vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more wheels 121.

The sensor system 104 may include several sensors that sense information about an ambient environment of the vehicle 100. For example, the sensor system 104 may include a positioning system 122 (the positioning system may be a global positioning system (global positioning system, GPS) system, a BeiDou system, or another positioning system), an inertial measurement unit (inertial measurement unit, IMU) 124, a radar 126, a laser rangefinder 128, and a camera 130. The sensor system 104 may further include a sensor that monitors an internal system of the vehicle 100 (for example, a vehicle-mounted air quality monitor, a fuel gauge, or an oil temperature gauge). Sensor data from one or more of these sensors may be used to detect an object and corresponding features (a position, a shape, a direction, a velocity, and the like) of the object. The detection and recognition are key functions for implementing a safe operation by the autonomous vehicle 100.

The positioning system 122 may be configured to estimate a geographical position of the vehicle 100. The IMU 124 is configured to sense a position and direction change of the vehicle 100 based on an inertial acceleration. In an embodiment, the IMU 124 may be a combination of an accelerometer and a gyroscope.

The radar 126 may use a radio signal to sense an object in an ambient environment of the vehicle 100. In some embodiments, in addition to sensing an object, the radar 126 may be further configured to sense a velocity and/or an advancing direction of the object.

The laser rangefinder 128 may use laser light to sense an object in an environment in which the vehicle 100 is located. In some embodiments, the laser rangefinder 128 may include one or more laser sources, a laser scanner, one or more detectors, and another system component.

The camera 130 may be configured to capture a plurality of images of an ambient environment of the vehicle 100. The camera 130 may be a still camera or a video camera.

The control system 106 controls operations of the vehicle 100 and components of the vehicle 100. The control system 106 may include various elements, including a steering system 132, a throttle 134, a braking unit 136, a computer vision system 140, a path control system 142, and an obstacle avoidance system 144.

The steering system 132 may operate to adjust an advancing direction of the vehicle 100. For example, in an embodiment, the steering system 132 may be a steering wheel system.

The throttle 134 is configured to control an operating speed of the engine 118, so as to control a velocity of the vehicle 100.

The braking unit 136 is configured to control the vehicle 100 to decelerate. The braking unit 136 may slow down the wheel 121 through friction. In another embodiment, the braking unit 136 may convert kinetic energy of the wheel 121 into a current. Alternatively, the braking unit 136 may reduce a rotational speed of the wheel 121 in another form, so as to control the velocity of the vehicle 100.

The computer vision system 140 may operate to process and analyze an image captured by the camera 130, so as to recognize objects and/or features in the ambient environment of the vehicle 100. The objects and/or the features may include a traffic signal, a road boundary, and an obstacle. The computer vision system 140 may use an object recognition algorithm, a structure from motion (structure from motion, SFM) algorithm, video tracking, and other computer vision technologies. In some embodiments, the computer vision system 140 may be configured to draw a map for an environment, track an object, estimate a velocity of an object, and the like.

The path control system 142 is configured to determine a travel path for the vehicle 100. In some embodiments, the path control system 142 may determine the travel path for the vehicle 100 with reference to data from the sensor, the GPS 122, and one or more predetermined maps.

The obstacle avoidance system 144 is configured to recognize, evaluate, and avoid or bypass, in another manner, a potential obstacle in the environment of the vehicle 100.

Certainly, in an example, the control system 106 may additionally or alternatively include components other than those shown and described. Alternatively, some of the components shown above may be omitted.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may be operated by using a touchscreen. In other cases, the peripheral device 108 may provide a means for the vehicle 100 to communicate with another device located in the vehicle. For example, the microphone 150 may receive audio (for example, a voice command or another audio input) from the user of the vehicle 100. Likewise, the speaker 152 may output audio to the user of the vehicle 100.

The wireless communication system 146 may wirelessly communicate with one or more devices directly or by using a communication network. For example, the wireless communication system 146 may use 3G cellular communication such as code division multiple access (code division multiple access, CDMA) or global system for mobile communications (Global System for Mobile Communications, GSM)/GPRS, 4th generation (4th generation, 4G) communication such as LTE, or 5th generation (5th Generation, 5G) communication. The wireless communication system 146 may communicate with a wireless local area network (wireless local area network, WLAN) by using Wi-Fi. In some embodiments, the wireless communication system 146 may directly communicate with a device by using an infrared link, Bluetooth, or ZigBee (ZigBee). Other wireless protocols, such as various vehicle communication systems, for example, the wireless communication system 146, may include one or more dedicated short range communications (dedicated short range communications, DSRC) devices, and these devices may include public and/or private data communication between vehicles and/or roadside stations.

The power supply 110 may supply power to the components of the vehicle 100. In an embodiment, the power supply 110 may be a rechargeable lithium-ion or lead-acid battery. One or more battery packs of such a battery may be configured as a power supply to supply power to the components of the vehicle 100. In some embodiments, the power supply 110 and the energy source 119 may be implemented together. For example, the power supply 110 and the energy source 119 are implemented together in some all-electric vehicles.

Some or all functions of the vehicle 100 are controlled by the computer system 112. The computer system 112 may include at least one processor 113. The processor 113 executes instructions 115 stored in a non-transitory computer-readable medium such as a data memory 114. The computer system 112 may be alternatively a plurality of computing devices that control individual components or subsystems of the vehicle 100 in a distributed manner.

The processor 113 may be any conventional processor such as a commercially available central processing unit (central processing unit, CPU). Alternatively, the processor may be a dedicated device such as an application-specific integrated circuit (application-specific integrated circuit, ASIC) or another hardware-based processor. Although FIG. 1 functionally shows the processor, the memory, and other elements of the computer 110 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer 110. Therefore, a reference to the processor or the computer is understood as including a reference to a set of processors, computers, or memories that may or may not operate in parallel. Different from using a single processor to perform the steps described herein, some components, such as a steering component and a deceleration component, each may have its own processor, and the processor performs only calculation related to a component-specific function.

In various aspects described herein, the processor may be located away from the vehicle and wirelessly communicate with the vehicle. In another aspect, some of the processes described herein are performed on a processor arranged in the vehicle, and others are performed by a remote processor, including performing a necessary step to perform single manipulation.

In some embodiments, the memory 114 may include instructions 115 (for example, program logic), and the instructions 115 may be executed by the processor 113 to perform various functions of the vehicle 100, including the functions described above. The memory 114 may also include additional instructions, including instructions to send data to, receive data from, interact with, and/or control one or more of the travel system 102, the sensor system 104, the control system 106, and the peripheral device 108.

In addition to the instructions 115, the memory 114 may further store data, for example, road map and path information; a position, a direction, a velocity, and other vehicle data of a vehicle; and other information. The information may be used by the vehicle 100 and the computer system 112 when the vehicle 100 operates in an autonomous mode, a semi-autonomous mode, and/or a manual mode.

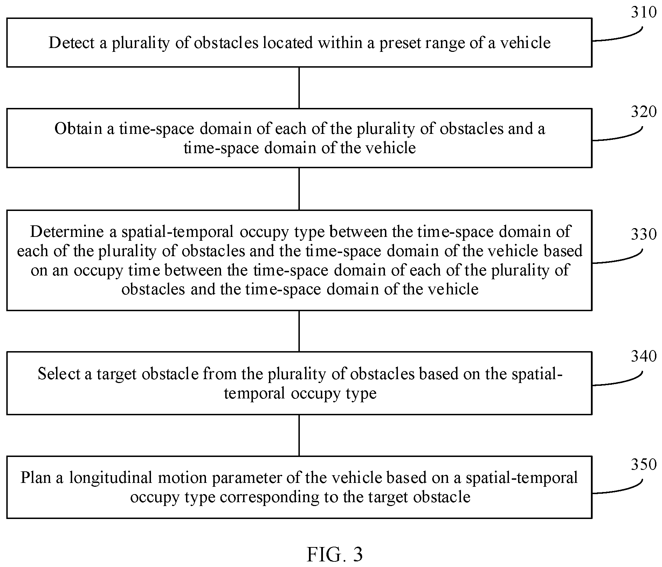

In some embodiments, the processor 113 may further perform a solution for planning a longitudinal motion parameter of a vehicle in embodiments of this application, to help the vehicle plan the longitudinal motion parameter. For a specific method for planning a longitudinal motion parameter, refer to descriptions of FIG. 3 below. For brevity, details are not described herein.

The user interface 116 is configured to provide information for or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control a function of the vehicle 100 based on inputs received from various subsystems (for example, the travel system 102, the sensor system 104, and the control system 106) and the user interface 116. For example, the computer system 112 may control, by using an input from the control system 106, the steering unit 132 to avoid obstacles detected by the sensor system 104 and the obstacle avoidance system 144. In some embodiments, the computer system 112 is operable to provide control over many aspects of the vehicle 100 and the subsystems of the vehicle 100.

Optionally, one or more of the foregoing components may be mounted in separation from or associated with the vehicle 100. For example, the memory 114 may be partially or completely separated from the vehicle 100. The foregoing components may be communicatively coupled together in a wired and/or wireless manner.

Optionally, the foregoing components are merely examples. In actual application, components in the foregoing modules may be added or omitted according to an actual requirement. FIG. 1 should not be understood as a limitation on embodiments of the present invention.

An automated driving vehicle traveling on a road, for example, the foregoing vehicle 100, may recognize an object in an ambient environment of the vehicle, to determine whether to adjust a current velocity. The object may be another vehicle, a traffic control device, or another type of object. In some examples, each recognized object may be independently considered, and a velocity to which the automated driving vehicle needs to be adjusted may be determined based on a feature of the object, for example, a current velocity or an acceleration of the object, or a distance between the object and the vehicle.

Optionally, the automated driving vehicle 100 or computing devices (for example, the computer system 112, the computer vision system 140, and the memory 114 in FIG. 1) associated with the automated driving vehicle 100 may predict behavior of a recognized object based on a feature of the recognized object and a condition (for example, traffic, rain, or ice on a road) of an ambient environment. Optionally, all recognized objects depend on behavior of each other. Therefore, all the recognized objects may be alternatively jointly considered to predict behavior of a single recognized object. The vehicle 100 can adjust the velocity of the vehicle 100 based on the predicted behavior of the recognized object. In other words, the automated driving vehicle can determine, based on the predicted behavior of the object, that the vehicle needs to be adjusted to a stable status (for example, an adjustment operation may include acceleration, deceleration, or stop). In this process, another factor may also be considered to determine the velocity of the vehicle 100, for example, a lateral position of the vehicle 100 on a road on which the vehicle 100 travels, a curvature of the road, and proximity between a static object and a dynamic object.

In addition to providing an instruction for adjusting the velocity of the automated driving vehicle, the computing device may further provide an instruction for modifying a steering angle of the vehicle 100, so that the automated driving vehicle follows a given trajectory and/or maintains a safe lateral distance and a safe longitudinal distance from an object (for example, a car in an adjacent lane of the road) near the automated driving vehicle.

The vehicle 100 may be a car, a truck, a motorcycle, a bus, a boat, an airplane, a helicopter, a lawn mower, an entertainment vehicle, a playground vehicle, a construction device, a tram, a golf cart, a train, a handcart, or the like. This is not particularly limited in embodiments of the present invention.

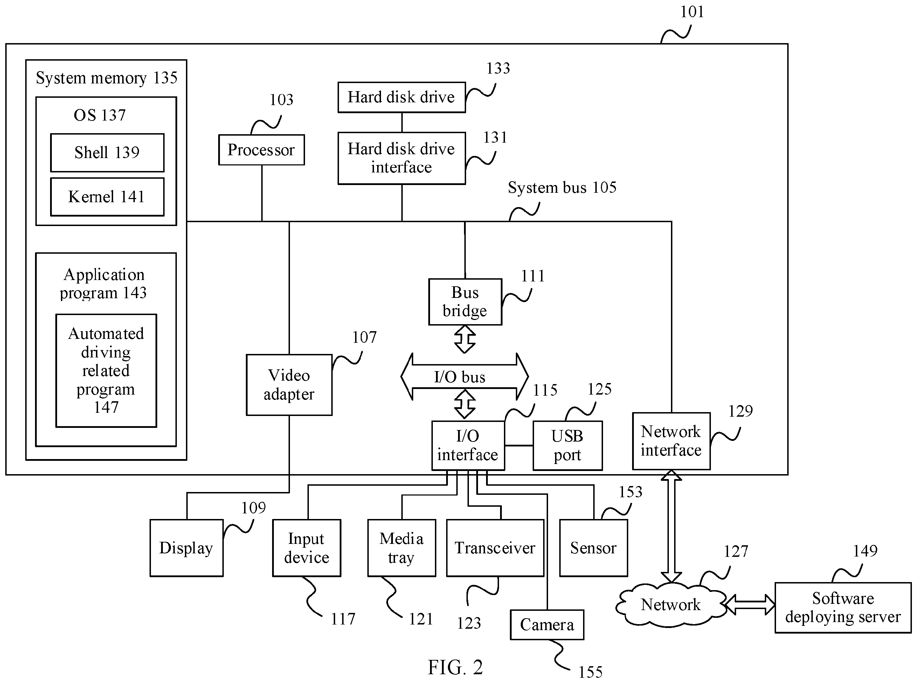

The foregoing describes, with reference to FIG. 1, a scenario to which embodiments of this application are applicable. The following describes, with reference to FIG. 2, an automated driving system to which embodiments of this application are applicable.

FIG. 2 is a schematic diagram of an automated driving system to which an embodiment of this application is applicable. A computer system 101 includes: a processor 103, where the processor 103 is coupled to a system bus 105, the processor 103 may be one or more processors, and each processor may include one or more processor cores; a video adapter (video adapter) 107, where the video adapter may drive a display 109, and the display 109 is coupled to the system bus 105, the system bus 105 is coupled to an input/output (input/output, I/O) bus 113 through a bus bridge 111, an I/O interface 115 is coupled to the I/O bus, and the I/O interface 115 communicates with a plurality of I/O devices, for example, an input device 117 (for example, a keyboard, a mouse, or a touchscreen) and a media tray (media tray) 121 (for example, a CD-ROM or a multimedia interface); a transceiver 123 (which may transmit and/or receive radio communication signals); a camera 155 (which may capture static and dynamic digital video images); and an external USB port 125. Optionally, an interface connected to the I/O interface 115 may be a USB port.

The processor 103 may be any conventional processor, including a reduced instruction set computing (Reduced Instruction Set Computing, RISC) processor, a complex instruction set computer (Complex Instruction Set Computer, CISC) processor, or a combination thereof. Optionally, the processor may be a dedicated apparatus such as an application-specific integrated circuit ASIC. Optionally, the processor 103 may be a neural network processor or a combination of a neural network processor and the foregoing conventional processor.

Optionally, in embodiments described in this specification, the computer system 101 may be located away from an automated driving vehicle and may wirelessly communicate with the automated driving vehicle 0. In another aspect, some processes described in this specification are performed by a processor disposed in the automated driving vehicle, and others are performed by a remote processor, including performing an action required for performing single manipulation.

The computer 101 may communicate with a software deploying server 149 through a network interface 129. The network interface 129 is a hardware network interface, for example, a network interface card. A network 127 may be an external network, for example, Internet; or may be an internal network, for example, Ethernet or a virtual private network (Virtual Private Network, VPN). Optionally, the network 127 may be alternatively a wireless network, for example, a Wi-Fi network or a cellular network.

A hard disk drive interface is coupled to the system bus 105. A hardware drive interface is connected to a hard disk drive. A system memory 135 is coupled to the system bus 105. Data running in the system memory 135 may include an operating system 137 and an application program 143 of the computer 101.

The operating system includes a shell (shell) 139 and a kernel (kernel) 141. The shell 139 is an interface between a user and the kernel of the operating system. The shell 139 is at an outermost layer of the operating system. The shell 139 manages interaction between the user and the operating system: waiting for a user input, interpreting the user input to the operating system, and processing various output results of the operating system.

The kernel 141 includes parts of the operating system that are used to manage a memory, a file, a peripheral, and a system resource. Directly interacting with hardware, the kernel of the operating system usually runs processes, provides inter-process communication, and provides CPU time slice management, interruptions, memory management, I/O management, and the like.

The application program 143 includes related programs for controlling automated driving of a vehicle, for example, a program for managing interaction between an automated driving vehicle and an obstacle on a road, a program for controlling a path or a velocity of an automated driving vehicle, and a program for controlling interaction between an automated driving vehicle and another automated driving vehicle on a road. The application program 143 also exists in a system of the software deploying server (deploying server) 149. In an embodiment, when the application program 147 needs to be executed, the computer system 101 may download the application program 143 from the software deploying server (deploying server) 149.

In some embodiments, the application program may further include a corresponding application program used for a solution, provided in embodiments of this application, for planning a longitudinal motion parameter of a vehicle. The solution for planning a longitudinal motion parameter of a vehicle in embodiments of this application is specifically described below. For brevity, details are not described herein.

A sensor 153 is associated with the computer system 101. The sensor 153 is configured to detect an ambient environment of the computer 101. For example, the sensor 153 may detect an animal, a car, an obstacle, a crosswalk, and the like. Further, the sensor may detect an ambient environment of an object such as the animal, the car, the obstacle, or the crosswalk, for example, an ambient environment of the animal, for example, another animal appearing around the animal, weather conditions, and brightness of the ambient environment. Optionally, if the computer 101 is located in an automated driving vehicle, the sensor may be a camera, an infrared sensor, a chemical detector, a microphone, or the like.

Currently, in a conventional solution, in a process of planning a longitudinal motion parameter of a vehicle, a controller (for example, the control system 106 shown in FIG. 1) first obtains a current state of an automated driving vehicle at a current moment and spatial-temporal prediction data of all obstacles within a preset range. For each of all the obstacles, the controller determines a conflict time and space between each obstacle and the automated driving vehicle, and determines a planned travel trajectory of the automated driving vehicle based on the conflict time and space of each obstacle. Then the controller determines a target longitudinal motion parameter from a planned travel trajectory corresponding to each target object, and sends a control instruction to a control device of the automated vehicle based on the determined target longitudinal motion parameter. However, in the foregoing process of determining a target velocity curve, the controller needs to determine a standard longitudinal motion parameter of the automated driving vehicle based on the spatial-temporal prediction data of all the obstacles within the preset range, in other words, the controller needs to traverse the spatial-temporal prediction data of all the obstacles within the preset range, and calculate a target longitudinal motion parameter of the automated driving vehicle for each obstacle. As a result, a very large amount of calculation is required for calculating the longitudinal motion parameter.

Therefore, to avoid the foregoing problem, embodiments of this application provide a new solution for planning a longitudinal velocity of a vehicle: determining, based on an occupy relationship between time-space domains of a plurality of obstacles within a preset range around a vehicle and a time-space domain of the vehicle, a spatial-temporal occupy type corresponding to each of the plurality of obstacles; selecting a target obstacle from the plurality of obstacles based on the spatial-temporal occupy type; and then planning a longitudinal velocity of the vehicle based on a spatial-temporal occupy type corresponding to the selected target obstacle and a motion state of the target obstacle. In this way, the controller no longer needs to traverse time-space domains of all of the plurality of obstacles to plan a longitudinal velocity of the vehicle, thereby helping reduce an amount of calculation required for calculating the longitudinal motion parameter.

It should be noted that the "longitudinal" in the "longitudinal motion parameter" of the vehicle in this application may be understood as a direction that is the same as a travel direction of the vehicle.

The following describes, with reference to FIG. 3, a method for planning a longitudinal motion parameter of a vehicle according to an embodiment of this application, that is according to the invention. FIG. 3 is a flowchart of a method for planning a longitudinal motion parameter of a vehicle according to an embodiment of this application. The method shown in FIG. 3 may be performed by a controller (for example, the control system 106 shown in FIG. 1). The method shown in FIG. 3 includes step 310 to step 350.

310: Detect a plurality of obstacles located within a preset range in which a vehicle is located.

The obstacle may be understood as an object that causes a specific obstruction to a traveling process of the vehicle. For example, the obstacle may be a passerby or another vehicle that crosses a lane in which the vehicle is located. For another example, the obstacle may be another vehicle located in front of the vehicle. This is not specifically limited in this embodiment of this application.

There are many manners of determining the obstacles. This is not limited in this embodiment of this application. For example, the plurality of obstacles may be sensed by a vehicle-mounted sensor, where the sensor may be the camera 130 shown in FIG. 1. For another example, a cloud may notify the vehicle of the plurality of obstacles within the preset range.

The preset range may be specified by a manufacturer or set by a user. This is not specifically limited in this application.

It should be noted that, in the foregoing process of determining the plurality of obstacles, motion states of the plurality of obstacles may be further determined simultaneously, to subsequently determine a time-space domain of each of the plurality of obstacles. Certainly, the motion states of the plurality of obstacles may be alternatively collected after the plurality of obstacles are determined for a period of time. This is not limited in this embodiment of this application.

320: Obtain a time-space domain of each of the plurality of obstacles and a time-space domain of the vehicle, where the time-space domain of each obstacle is used to indicate a change of a position space of each obstacle with time, and the time-space domain of the vehicle is used to indicate a change of a position space occupied by the vehicle with time.

Optionally, the time-space domain of each of the plurality of obstacles may be predicted based on a motion state of each of the plurality of obstacles.

The motion state of each obstacle may include a current position, a current velocity, a current acceleration, a direction, a behavior intent, a motion trajectory within a preset time, and the like of each obstacle. The behavior intent may include a lane crossing intent, a lane cut-in intent, a lane forward-traveling intent, a lane bypassing intent, and the like.

The time-space domain of each obstacle may be represented by using a pre-established coordinate system. Specifically, the time-space domain of each obstacle may be represented by using a coordinate position of each obstacle in the coordinate at different moments.

It should be noted that the coordinate system may be a world coordinate system or a road coordinate system. This is not limited in this embodiment of this application. The world coordinate system is a coordinate system fixed relative to the ground. There are a plurality of manners of defining the world coordinate system. For example, an origin of the world coordinate system may be defined at an initial position of a target object, and a positive direction of an x-axis of the world coordinate system is along a motion direction of the target object. When the target object moves, the position of the origin and the positive direction of the x-axis are fixed on the ground, without moving along with the target. For another example, the origin of the world coordinate system may be alternatively defined at a specific position on the ground, and the x-axis of the world coordinate system points north. A starting point of a road path may be used as an origin of the road coordinate system, a direction along the road is a positive direction of an S-axis, and a leftward direction perpendicular to the positive direction of the S-axis is a positive direction of an L-axis of the road coordinate system.

Optionally, the time-space domain of the vehicle may be predicted based on a motion state of the vehicle.

The motion state of the vehicle may include a current position, a current velocity, a current acceleration, a direction, a behavior intent, a motion trajectory within a preset time, and the like of the vehicle.

The time-space domain of the vehicle may be represented by using a pre-established coordinate system. Specifically, the time-space domain of the vehicle may be represented by using a coordinate position of the vehicle in the coordinate at different moments. It should be understood that the coordinate representing the time-space domain of the vehicle may be the same as the coordinate representing the obstacle. For a manner of establishing the coordinate system, refer to the foregoing descriptions. For brevity, details are not described herein again.

330: Determine a spatial-temporal occupy type between the time-space domain of each of the plurality of obstacles and the time-space domain of the vehicle based on an occupy time between the time-space domain of each of the plurality of obstacles and the time-space domain of the vehicle, where the occupy time is used to indicate a time period in which the position space of each of the plurality of obstacles occupies at least a part of a position of the vehicle.

That the occupy time is used to indicate a time period in which the position space of each of the plurality of obstacles occupies at least a part of a position of the vehicle may be understood as that the occupy time includes an overlapping time between the time-space domain of each of the plurality of obstacles and the time-space domain of the vehicle, and/or a length of the overlapping time.

Optionally, the spatial-temporal occupy type is one of a plurality of preset spatial-temporal occupy types, and the plurality of spatial-temporal occupy types include some or all of the following spatial-temporal occupy types: a current long-term occupy (current long-term occupy, CO) type, a temporary occupy (temporary occupy, TO) type, or a future long-term occupy (future long-term occupy, FO) type.

If the occupy time is a period of time whose starting moment is a collection moment, the time period corresponding to the occupy time is greater than a first time period threshold, and the collection moment is a moment at which the motion states of the plurality of obstacles are collected, the spatial-temporal occupy type between the time-space domain of each of the plurality of obstacles and the time-space domain of the vehicle is the current long-term occupy type.

If the time period corresponding to the occupy time is less than a second time period threshold, the spatial-temporal occupy type between the time-space domain of each of the plurality of obstacles and the time-space domain of the vehicle is the temporary occupy type.

It should be noted that, for the temporary occupy type, the occupy time may be a period of time whose starting point is the collection moment, or may be a period of time later than the collection moment. This is not specifically limited in this embodiment of this application.

If the occupy time is a period of time later than the collection moment, and the time period corresponding to the occupy time is greater than a third time period threshold, the spatial-temporal occupy type between the time-space domain of each of the plurality of obstacles and the time-space domain of the vehicle is the future long-term occupy type.

It should be noted that the first time period threshold is greater than or equal to the second time period threshold, and the third time period threshold is greater than or equal to the second time period threshold. That is, an occupy time corresponding to the current long-term occupy type is longer than an occupy time corresponding to the temporary occupy type, and an occupy time corresponding to the future long-term occupy type is longer than the occupy time corresponding to the temporary occupy type.

When the first time period threshold is equal to the second time period threshold, the first time period threshold and the second time period threshold may be understood as a same time period threshold. Correspondingly, when the third time period threshold is equal to the second time period threshold, the third time period threshold and the second time period threshold may be understood as a same time period threshold.

The first time period threshold and the third time period threshold may be a same time period threshold, or may be different time period thresholds. This is not limited in this embodiment of this application.

It should be noted that the first time period threshold, the second time period threshold, and the third time period threshold may be set by the manufacturer.

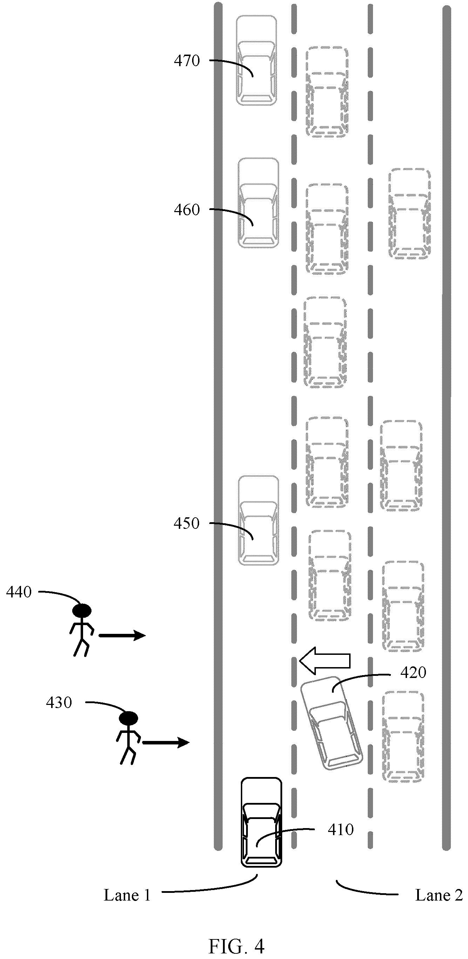

For ease of understanding, the following describes a mapping relationship between different occupy times and spatial-temporal occupy types with reference to a driving scenario shown in FIG. 4. Six obstacles (namely, 420 to 470) shown in FIG. 4 are used as examples for description below.

It is assumed that a vehicle 410 travels along a lane 1, and a current position is shown in FIG. 4. The obstacle 1, that is, the obstacle 420 is a vehicle traveling in a lane 2, and the obstacle 1 is ready to cut into the lane 1 in which the vehicle 410 is located from the lane 2, where a behavior intent of the obstacle 1, that is, the obstacle 420 is lane cut-in. The obstacle 2, that is, the obstacle 430 is a pedestrian ready to cross the lane 1, where a behavior intent of the obstacle 2, that is, the obstacle 430 is lane crossing. The obstacle 3, that is, the obstacle 440 is a pedestrian ready to cross the lane 1, where a behavior intent of the obstacle 3, that is, the obstacle 440 is lane crossing. The obstacles 4 to 6 450, 460, and 470 are vehicles traveling along the lane 1, where behavior intents of the obstacles 4 to 6 450, 460, and 470 are lane forward-traveling.

Therefore, for the obstacle 1, that is, the obstacle 420, when a motion state of the obstacle 1, that is, the obstacle 420 is collected, the obstacle 1, that is, the obstacle 420 has not cut into the lane 1. By predicting a time-space domain of the obstacle 1, that is, the obstacle 420 based on the motion state of the obstacle 1, that is, the obstacle 420, it can be learned that a position space corresponding to a process from the obstacle 1, that is, the obstacle 420 starting to cut into the lane 1 to the obstacle 1, that is, the obstacle 420 having completely cut into the lane 1 and traveling along the lane 1 occupies a position space in which the vehicle 410 travels along the lane 1. Therefore, a time period corresponding to a position space change from the obstacle 1, that is, the obstacle 420 starting to cut into the lane 1 to the obstacle 1, that is, the obstacle 420 having completely cut into the lane 1 is the occupy time in the foregoing descriptions. In this case, the time period corresponding to the occupy time is greater than the third time period threshold, and the occupy time is a period of time later than the collection moment. To sum up, it can be determined, based on the occupy time, that an occupy relationship between the time-space domain of the obstacle 1, that is, the obstacle 420 and a time-space domain of the vehicle 410 belongs to the future long-term occupy type.

For the obstacle 2, that is, the obstacle 430, by predicting a time-space domain of the obstacle 2, that is, the obstacle 430 based on a motion state of the obstacle 2, that is, the obstacle 430, it can be learned that the obstacle 2, that is, the obstacle 430 occupies the position space of the vehicle 410 when the obstacle 2, that is, the obstacle 430 moves from a boundary closest to the lane 1 (namely, a left boundary in FIG. 4) to a boundary farthest from the lane 1 (namely, a right boundary in FIG. 4). Therefore, a time period corresponding to a position space in which the obstacle 2, that is, the obstacle 430 moves from the boundary closest to the lane 1 (namely, the left boundary in FIG. 4) to the boundary farthest from the lane 1 (namely, the right boundary in FIG. 4) is the occupy time in the foregoing descriptions. In this case, the time period corresponding to the occupy time is less than the second time period threshold. To sum up, it can be determined, based on the occupy time, that an occupy relationship between the time-space domain of the obstacle 2, that is, the obstacle 430 and the time-space domain of the vehicle 410 belongs to the temporary occupy type.

For the obstacle 3, that is, the obstacle 440, by predicting a time-space domain of the obstacle 3, that is, the obstacle 440 based on a motion state of the obstacle 3, that is, the obstacle 440, it can be learned that the obstacle 3, that is, the obstacle 440 occupies the position space of the vehicle 410 when the obstacle 3, that is, the obstacle 440 moves from a boundary closest to the lane 1 (namely, a left boundary in FIG. 4) to a boundary farthest from the lane 1 (namely, a right boundary in FIG. 4). Therefore, a time period corresponding to a position space in which the obstacle 3, that is, the obstacle 440 moves from the boundary closest to the lane 1 (namely, the left boundary in FIG. 4) to the boundary farthest from the lane 1 (namely, the right boundary in FIG. 4) is the occupy time in the foregoing descriptions. In this case, the time period corresponding to the occupy time is less than the second time period threshold. To sum up, it can be determined, based on the occupy time, that an occupy relationship between the time-space domain of the obstacle 3, that is, the obstacle 440 and the time-space domain of the vehicle 410 belongs to the temporary occupy type.

For the obstacle 4, that is, the obstacle 450, when a motion state of the obstacle 4, that is, the obstacle 450 is collected, the obstacle 4, that is, the obstacle 450 is already traveling in the lane 1. By predicting a time-space domain of the obstacle 4, that is, the obstacle 450 based on the motion state of the obstacle 4, that is, the obstacle 450, it can be learned that a position space corresponding to a process in which the obstacle 4, that is, the obstacle 450 travels along the lane 1 occupies the position space in which the vehicle 410 travels along the lane 1. Therefore, a time period corresponding to a position space change in which the obstacle 4, that is, the obstacle 450 travels along the lane 1 is the occupy time in the foregoing descriptions. In this case, a length of the time period corresponding to the occupy time is greater than the third time period threshold, and the occupy time is a period of time whose starting point is the collection moment. To sum up, it can be determined, based on the occupy time, that an occupy type between the time-space domain of the obstacle 4, that is, the obstacle 450 and the time-space domain of the vehicle 410 is the current long-term occupy type.

For the obstacle 5, that is, the obstacle 460, when a motion state of the obstacle 5, that is, the obstacle 460 is collected, the obstacle 5, that is, the obstacle 460 is already traveling in the lane 1. By predicting a time-space domain of the obstacle 5, that is, the obstacle 460 based on the motion state of the obstacle 5, that is, the obstacle 460, it can be learned that a position space corresponding to a process in which the obstacle 5, that is, the obstacle 460 travels along the lane 1 occupies the position space in which the vehicle 410 travels along the lane 1. Therefore, a time period corresponding to a position space change in which the obstacle 5, that is, the obstacle 460 travels along the lane 1 is the occupy time in the foregoing descriptions. In this case, a length of the time period corresponding to the occupy time is greater than the third time period threshold, and the occupy time is a period of time whose starting point is the collection moment. To sum up, it can be determined, based on the occupy time, that an occupy type between the time-space domain of the obstacle 5, that is, the obstacle 460 and the time-space domain of the vehicle 410 is the current long-term occupy type.

For the obstacle 6, that is, the obstacle 470, when a motion state of the obstacle 6, that is, the obstacle 470 is collected, the obstacle 6, that is, the obstacle 470 is already traveling in the lane 1. By predicting a time-space domain of the obstacle 6, that is, the obstacle 470 based on the motion state of the obstacle 6, that is, the obstacle 470, it can be learned that a position space corresponding to a process in which the obstacle 6, that is, the obstacle 470 travels along the lane 1 occupies the position space in which the vehicle 410 travels along the lane 1. Therefore, a time period corresponding to a position space change in which the obstacle 6, that is, the obstacle 470 travels along the lane 1 is the occupy time in the foregoing descriptions. In this case, a length of the time period corresponding to the occupy time is greater than the third time period threshold, and the occupy time is a period of time whose starting point is the collection moment. To sum up, it can be determined, based on the occupy time, that an occupy type between the time-space domain of the obstacle 6, that is, the obstacle 470 and the time-space domain of the vehicle 410 is the current long-term occupy type.

340: Select a target obstacle from the plurality of obstacles based on the spatial-temporal occupy type. The following separately describes obstacle selection conditions corresponding to the foregoing three spatial-temporal occupy types.

For the temporary occupy type, a longitudinal distance between an obstacle and the vehicle and/or a time to collision (time to collision, TTC) between an obstacle and the vehicle has large impact on a longitudinal velocity of the vehicle. Therefore, the target obstacle may be selected based on a longitudinal distance between an obstacle and the vehicle and/or a TTC between an obstacle and the vehicle.

That is, if the spatial-temporal occupy type is the temporary occupy type, a distance between the target obstacle and the vehicle is shorter than a distance between another obstacle and the vehicle, where the another obstacle is an obstacle other than the target obstacle in the plurality of obstacles; and/or a TTC between the target obstacle and the vehicle is shorter than a TTC between the another obstacle and the vehicle.

The target obstacle may be one or more of the plurality of obstacles. This is not limited in this embodiment of this application. Certainly, in the case of expecting to further select a quantity of target obstacles to reduce an amount of calculation required for path planning, an obstacle with a shortest distance from the vehicle may be selected from the plurality of obstacles as the target obstacle, and/or an obstacle with a shortest TTC from the vehicle may be selected from the plurality of obstacles as the target obstacle.

For the current long-term occupy type, a longitudinal distance between an obstacle and the vehicle is an important factor that affects longitudinal velocity planning of the vehicle. Therefore, the target obstacle may be selected based on a longitudinal distance between the vehicle and an obstacle belonging to the current long-term occupy type.

That is, a longitudinal distance between the target obstacle and the vehicle is less than a longitudinal distance between another obstacle in the plurality of obstacles and the vehicle, where the another obstacle is an obstacle other than the target obstacle in the plurality of obstacles.

The longitudinal direction may be understood as a direction that is the same as an axial direction of the vehicle, a travel direction of the vehicle, or a heading direction of the vehicle.

The target obstacle may be understood as one or more of the plurality of obstacles. This is not limited in this embodiment of this application. Certainly, in the case of expecting to further select a quantity of target obstacles to reduce an amount of calculation required for path planning, an obstacle with a shortest longitudinal distance from the vehicle may be selected from the plurality of obstacles as the target obstacle.

For example, in the scenario shown in FIG. 4, a longitudinal distance between the obstacle 4, that is, the obstacle 450 and the vehicle 410 is less than a longitudinal distance between the obstacle 5 440 and the vehicle 410, and the longitudinal distance between the obstacle 4, that is, the obstacle 450 and the vehicle 410 is less than a longitudinal distance between the obstacle 6 450 and the vehicle 410. Therefore, the obstacle 4, that is, the obstacle 450 may be used as a target obstacle corresponding to the current long-term occupy type. For the future long-term occupy type, a time to line (time to line, TTL) between an obstacle and the vehicle has large impact on the longitudinal velocity of the vehicle. Therefore, the target obstacle may be selected based on a TTL between an obstacle and the vehicle.

That is, if the spatial-temporal occupy type is the future long-term occupy type, a TTL between the target obstacle and the vehicle is shorter than a TTL between another obstacle and the vehicle, where the another obstacle is an obstacle other than the target obstacle in the plurality of obstacles.

The target obstacle may be understood as one or more of the plurality of obstacles. This is not limited in this embodiment of this application. Certainly, in the case of expecting to further select a quantity of target obstacles to reduce an amount of calculation required for path planning, an obstacle with a shortest TTL from the vehicle may be selected from the plurality of obstacles as the target obstacle.

350: Plan a longitudinal motion parameter of the vehicle based on the spatial-temporal occupy type corresponding to the target obstacle, where the longitudinal motion parameter of the vehicle may include a position, in a coordinate system, to which the vehicle needs to travel at a specific moment, and an acceleration and a velocity that the vehicle needs to reach at a specific moment.

A format of the longitudinal motion parameter of the vehicle may be defined as $v_{speed\ goal} = (s,\ t,\ v,\ a)$. The longitudinal motion parameter $v_{speed\ goal}$ of the vehicle indicates that a longitudinal displacement by which the vehicle needs to move in the coordinate system at a moment t is s, a velocity that the vehicle needs to reach at the moment $t$ is $v$, and an acceleration is $a$.

It should be noted that there are many manners of planning the longitudinal motion parameter of the vehicle. The following solves the longitudinal motion parameter of the vehicle by using constraint conditions corresponding to different spatial-temporal occupy types. The following first describes constraint conditions corresponding to different spatial-temporal occupy types.

For a target obstacle of the current long-term occupy type, a longitudinal position of the target obstacle in the coordinate system within a planning time period being greater than a longitudinal position of the vehicle in the coordinate system may be set as a constraint condition.

Assuming that the target obstacle corresponding to the current long-term occupy type is an obstacle i and the obstacle i is an obstacle with a shortest longitudinal distance from the vehicle in the plurality of obstacles, a constraint condition formed by the obstacle i of the current long-term occupy type on the planning of the longitudinal motion parameter of the vehicle is as follows: $s(t) < s_i$, $t \in [0, T]$, and $s_i = v_i t + s_{i0}$, $t \in [0, T]$, where $v_i$ indicates a velocity of the obstacle $i$, $s_{i0}$ indicates a longitudinal position of the obstacle i in the coordinate system at an initial moment (also referred to as a collection moment), and T indicates the planning time period.

For a target obstacle of the future long-term occupy type, a longitudinal position of the target obstacle in the coordinate system within a planning time period being greater than a longitudinal position of the vehicle in the coordinate system may be used as a constraint condition, where a starting moment of a planning time is a moment at which the target obstacle starts to occupy the time-space domain of the vehicle within a second time period. For a lane cut-in scenario, that the target obstacle starts to occupy the time-space domain of the vehicle within the second time period may be understood as a cut-in moment at which the target obstacle cuts into a lane in which the vehicle travels.

Assuming that the target obstacle corresponding to the future long-term occupy type is an obstacle $j$ and the obstacle $j$ is an obstacle with a shortest TTL from the lane in which the vehicle travels in the plurality of obstacles, a constraint condition formed by the obstacle $j$ of the future long-term occupy type on the planning of the longitudinal motion

$$
\begin{cases}
s(t) < s_j, t \in [0, T] \\
\text{or} \\
s(t) > s_j, t \in [t_j, T]
\end{cases}
$$

parameter of the vehicle is as follows: , $s_j = v_j(t - t_j) + s_0$, ($t \in [t_j, T]$), where $v_j$ indicates a velocity of the obstacle $j$, $s_{j0}$ indicates a longitudinal position of the obstacle $j$ in the coordinate system at an initial moment (also referred to as a collection moment), T indicates the planning time period, $t_j$ indicates a cut-in moment at which the obstacle $j$ cuts into the lane in which the vehicle travels, and $s_0$ indicates a longitudinal position of the obstacle $j$ in the coordinate system at the cut-in moment.

It should be noted that the obstacle $j$ is an obstacle with a shortest TTL from the lane in which the vehicle travels in the plurality of obstacles, or the obstacle $j$ is an obstacle with a shortest longitudinal distance from the vehicle in the coordinate system in the plurality of obstacles.

For a target obstacle of the temporary occupy type, three constraint conditions may be set for planning the longitudinal motion parameter of the vehicle. Constraint condition 1: A longitudinal position of the vehicle in the coordinate system within a planning time period is less than a longitudinal position of an obstacle k in the coordinate system. Constraint condition 2: A longitudinal position of the vehicle in the coordinate system within a planning time period is greater than a longitudinal position of an obstacle k in the coordinate system, and the longitudinal position of the vehicle in the coordinate system is less than a longitudinal position of an obstacle l in the coordinate system. Constraint condition 3: A longitudinal position of the vehicle in the coordinate system within a planning time period is greater than a longitudinal position of an obstacle l in the coordinate system. The obstacle k is an obstacle with a shortest longitudinal distance from the vehicle in the coordinate system in the plurality of obstacles. The obstacle l is an obstacle with a shortest TTC from the vehicle in the plurality of obstacles.

Assuming that target obstacles corresponding to the temporary occupy type are an obstacle $q$ and an obstacle $p$, the obstacle $q$ is an obstacle with a shortest longitudinal distance from the vehicle in the coordinate system in the plurality of obstacles, and the obstacle P is an obstacle with a shortest TTC from the vehicle in the plurality of obstacles, a constraint condition formed by the obstacle $q$ and the obstacle P of the temporary occupy type on the planning of the longitudinal

$$
\begin{cases}
s(t) < s_q, t \in [t_{q\_in}, t_{q\_out}] \\
\text{or} \\
s(t) > s_p, t \in [t_{p\_in}, t_{p\_out}] \\
\text{or} \\
s_q < s(t) < s_p, t \in [t_{q\_in}, t_{q\_out}]
\end{cases}
$$

motion parameter of the vehicle is as follows: , $s_q = v_q t + s_{q0}$, ($t \in [t_{q\_in}, t_{q\_out}]$), and $s_p = v_p t + s_{p0}$, ($t \in [t_{p\_in}, t_{p\_out}]$), where $v_q$ indicates a longitudinal motion parameter of the obstacle $q$ along a travel path of the obstacle $q$, $v_p$ indicates a longitudinal motion parameter of the obstacle $p$ along a travel path of the obstacle $p$, $s_{q0}$ indicates a longitudinal position of the obstacle $q$ in the coordinate system at an initial moment (also referred to as a collection moment), $s_{p0}$ indicates a longitudinal position of the obstacle P in the coordinate system at an initial moment (also referred to as a collection moment), $t_{q\_in}$ indicates a moment at which the obstacle $q$ enters the lane in which the vehicle travels, $t_{q\_out}$ indicates a moment at which the obstacle $q$ exits the lane in which the vehicle travels, $t_{p\_in}$ indicates a moment at which the obstacle $p$ enters the lane in which the vehicle travels, and $t_{p\_out}$ indicates a moment at which the obstacle $p$ exits the lane in which the vehicle travels.

The foregoing describes methods for setting constraint conditions based on three different spatial-temporal occupy types. The following describes a method for planning a longitudinal motion parameter of a vehicle with reference to the constraint conditions described above. To improve accuracy of a planning result in a process of planning a longitudinal motion parameter of a vehicle, during calculation of a planning result for one spatial-temporal occupy type, constraint conditions corresponding to the other two spatial-temporal occupy types may be combined to plan the longitudinal motion parameter of the vehicle.

The foregoing method further includes: planning the longitudinal motion parameter of the vehicle based on the spatial-temporal occupy type corresponding to the target obstacle and a motion state of the target obstacle, including: determining, based on the spatial-temporal occupy type corresponding to the target obstacle and the motion state of the target obstacle, a first constraint condition corresponding to the spatial-temporal occupy type of the target obstacle, where the first constraint condition is used to constrain the longitudinal motion parameter of the vehicle, to avoid collision between the target obstacle and the vehicle; obtaining a second constraint condition corresponding to another spatial-temporal occupy type, where the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and calculating the longitudinal motion parameter of the vehicle based on the first constraint condition and the second constraint condition.

The spatial-temporal occupy type corresponding to the target obstacle may be one of the foregoing three spatial-temporal occupy types. In this case, the another spatial-temporal occupy type may be a spatial-temporal occupy type other than the spatial-temporal occupy type corresponding to the target obstacle in the three spatial-temporal occupy types. For example, when the spatial-temporal occupy type corresponding to the target obstacle is the future long-term occupy type, the another spatial-temporal occupy type may include the temporary occupy type and the current long-term occupy type. For another example, when the spatial-temporal occupy type corresponding to the target obstacle is the current long-term occupy type, the another spatial-temporal occupy type may include the temporary occupy type.

The following describes a method for calculating a longitudinal motion parameter of a vehicle by using an example in which the spatial-temporal occupy type corresponding to the target obstacle is the current long-term occupy type and the another spatial-temporal occupy type includes the future long-term occupy type and the temporary occupy type. It should be noted that, the following mainly describes a method for calculating a longitudinal motion parameter of a vehicle. For constraint conditions of various spatial-temporal occupy types included in the method, refer to the foregoing descriptions. For brevity, details are not described herein again.

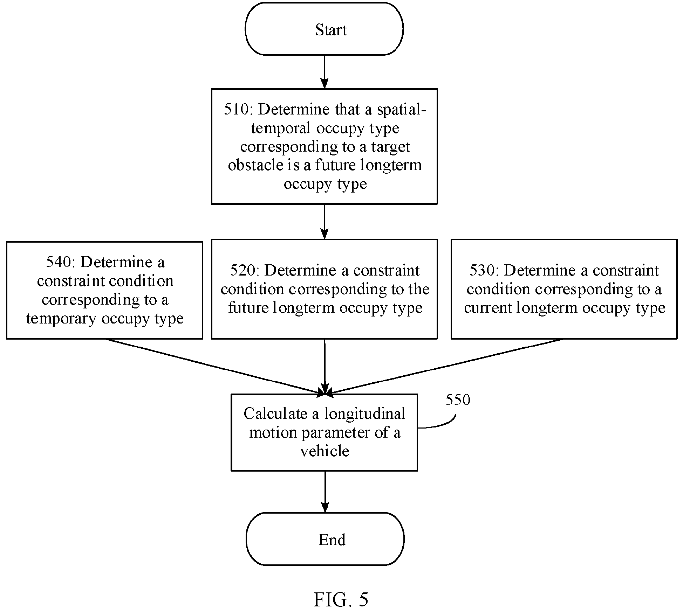

FIG. 5 is a schematic diagram of a method for calculating a longitudinal motion parameter of a vehicle according to an embodiment of this application. The method shown in FIG. 5 includes step 510 to step 550.

510: Determine that a spatial-temporal occupy type corresponding to a target obstacle is a future long-term occupy type.

520: Determine a constraint condition corresponding to the future occupy type:
$$\begin{cases} s(t) < s_j, t \in [0, T] \\ \text{or} \\ s(t) > s_j, t \in [t_j, T] \end{cases}$$
, and $s_j = v_j(t - t_j) + s_0$, $(t \in [t_j, T])$.

530: Determine a constraint condition corresponding to a current long-term occupy type: $s(t) < s_i, t \in [0, T]$, and $s_i = v_i t + s_{i0}$, $(t \in [0, T])$.

540: Determine a constraint condition corresponding to a temporary occupy type:

$$\begin{cases} s(t) < s_q, t \in [t_{q\_in}, t_{q\_out}] \\ \text{or} \\ s(t) > s_p, t \in [t_{p\_in}, t_{p\_out}] \\ \text{or} \\ s_q < s(t) < s_p, t \in [t_{q\_in}, t_{q\_out}] \end{cases}, \quad s_q = v_q t + s_{q0}, (t \in [t_{q\_in}, t_{q\_out}]), \text{ and } s_p = v_p t + s_{p0}, (t \in [t_{p\_in}, t_{p\_out}]).$$

550: Calculate a minimum longitudinal motion parameter $v_{speed\ goal}$ of the vehicle based on the constraint conditions corresponding to the foregoing three occupy types.

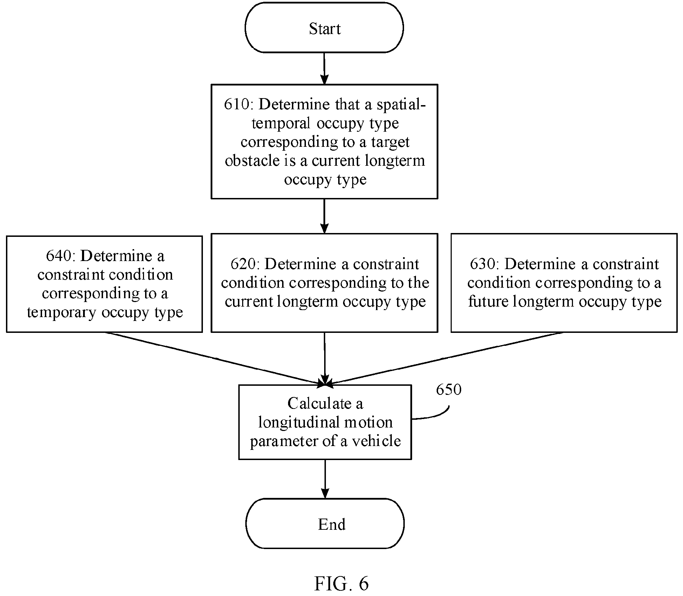

FIG. 6 is a schematic diagram of a method for calculating a longitudinal motion parameter of a vehicle according to another embodiment of this application. The method shown in FIG. 6 includes step 610 to step 650.

610: Determine that a spatial-temporal occupy type corresponding to a target obstacle is a current long-term occupy type.

620: Determine a constraint condition corresponding to the current long-term occupy type: $s(t) < s_i, t \in [0, T]$, and $s_i = v_i t + s_{i0}$, $(t \in [0, T])$.

$$\begin{cases} s(t) < s_j, t \in [0, T] \\ \text{or} \\ s(t) > s_j, t \in [t_j, T] \end{cases}$$

630: Determine a constraint condition corresponding to a future occupy type:
, and $s_j = v_j(t - t_j) + s_0$, $(t \in [t_j, T])$.

640: Determine a constraint condition corresponding to a temporary occupy type:

$$\begin{cases} s(t) < s_q, t \in [t_{q\_in}, t_{q\_out}] \\ \quad \text{or} \\ s(t) > s_p, t \in [t_{p\_in}, t_{p\_out}] \\ \quad \text{or} \\ s_q < s(t) < s_p, t \in [t_{q\_in}, t_{q\_out}] \end{cases} , \quad s_q = v_q t + s_{q0}, (t \in [t_{q\_in}, t_{q\_out}]), \text{ and } s_p = v_p t + s_{p0}, (t \in [t_{p\_in}, t_{p\_out}]).$$

650: Calculate a minimum longitudinal motion parameter $v_{speed\ goal}$ of the vehicle based on the constraint conditions corresponding to the foregoing three occupy types.

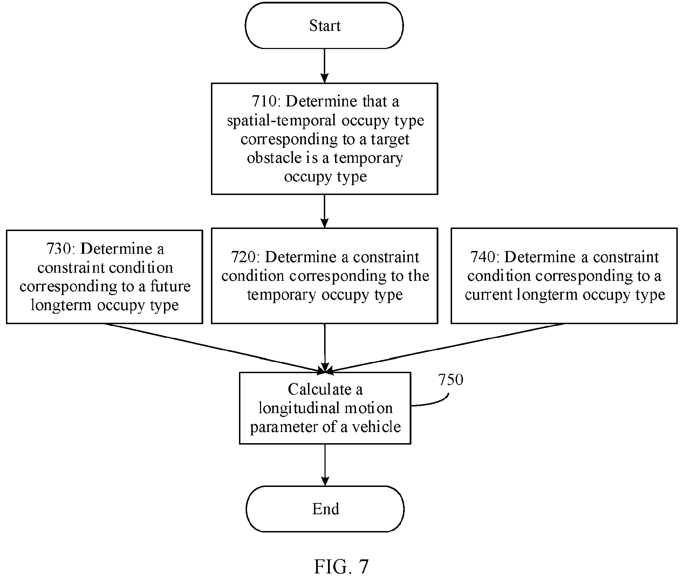

FIG. 7 is a schematic diagram of a method for calculating a longitudinal motion parameter of a vehicle according to another embodiment of this application. The method shown in FIG. 7 includes step 710 to step 750.

710: Determine that a spatial-temporal occupy type corresponding to a target obstacle is a temporary occupy type.

720: Determine a constraint condition corresponding to the temporary occupy type:

$$\begin{cases} s(t) < s_q, t \in [t_{q\_in}, t_{q\_out}] \\ \quad \text{or} \\ s(t) > s_p, t \in [t_{p\_in}, t_{p\_out}] \\ \quad \text{or} \\ s_q < s(t) < s_p, t \in [t_{q\_in}, t_{q\_out}] \end{cases} , \quad s_q = v_q t + s_{q0}, (t \in [t_{q\_in}, t_{q\_out}]), \text{ and } s_p = v_p t + s_{p0}, (t \in [t_{p\_in}, t_{p\_out}]).$$

730: Determine a constraint condition corresponding to a future occupy type:

$$\begin{cases} s(t) < s_j, t \in [0, T] \\ \text{or} \\ s(t) > s_j, t \in [t_j, T] \end{cases} , \text{ and}$$

$$s_j = v_j(t - t_j) + s_0, (t \in [t_j, T]).$$

740: Determine a constraint condition corresponding to a current long-term occupy type: $s(t) < s_i, t \in [0, T]$, and $s_i = v_i t + s_{i0}, (t \in [0, T])$.

750: Calculate a minimum longitudinal motion parameter $v_{speed\ goal}$ of the vehicle based on the constraint conditions corresponding to the foregoing three occupy types.

Certainly, in this embodiment of this application, a longitudinal motion parameter of the vehicle may be separately planned based on the constraint conditions corresponding to the foregoing three spatial-temporal occupy types. This is not limited in embodiments of this application.

To improve safety of traveling of the vehicle, the longitudinal motion parameter of the vehicle may be further verified. Specifically, collision risk verification is performed on the longitudinal motion parameter of the vehicle that is calculated for the foregoing three spatial-temporal occupy types, to ensure safety of a finally output longitudinal motion parameter of the vehicle. The collision risk verification may be performing calculation and solution based on a displacement-time graph (ST graph). To be specific, all target obstacles are projected into the ST graph, and if collision occurs with none of all the target obstacles in a process of reaching a position corresponding to the longitudinal motion parameter from a current position of the vehicle, it can be considered that the position corresponding to the longitudinal motion parameter is safe.

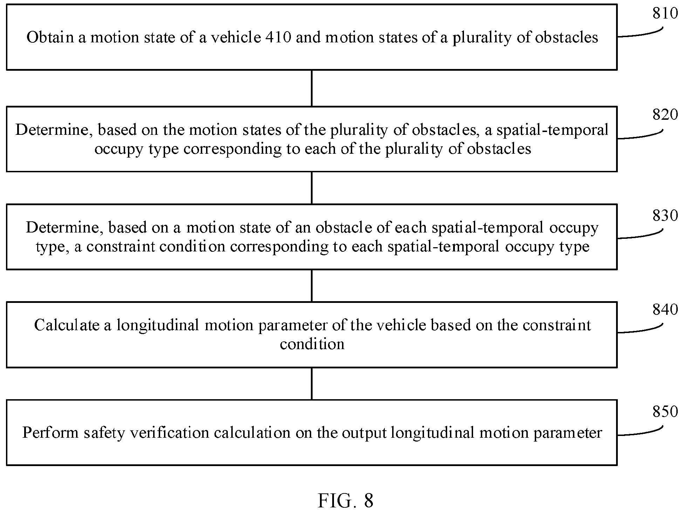

The following describes, with reference to the scenario shown in FIG. 4, a method for planning a longitudinal motion parameter of a vehicle according to an embodiment of this application. FIG. 8 is a flowchart of a method for planning a longitudinal motion parameter of a vehicle according to an embodiment of this application. The method shown in FIG. 8 includes step 810 to step 850.

810: Obtain a motion state of the vehicle 410 and motion states of a plurality of obstacles.

It should be noted that a current position of an object (a vehicle or an obstacle) corresponding to a motion state in a coordinate system is denoted as "Position", an x-axis in the coordinate system corresponds to a travel direction of the vehicle, and a y-axis in the coordinate system is perpendicular to the travel direction of the vehicle. A current velocity of the object may be denoted as "Velocity", a current acceleration of the object may be denoted as "Acceleration", and a heading direction of the object may be denoted as "Heading".

Therefore, the motion state $O_{ego}$ of the vehicle 410 may be expressed as $O_{ego}$ = {Position: $(x_{ego}, y_{ego})$, Velocity: $V_{ego}$, Acceleration: $a_{ego}$, Heading: $\theta_{ego}$}. Optionally, the motion state of the vehicle 410 may further include a lateral action (lateral action) state of the vehicle 410: lane keeping/lane changing, and/or a travel path Path corresponding to a destination lane of the vehicle 410, where the travel path may be expressed as Path = {$(x_1, y_1)$, $(x_2, y_2)$, ..., $(x_{n-1}, y_{n-1})$, $(x_n, y_n)$}.

A motion state $O_{object1}$ of the obstacle 1 (object1) 420 may be expressed as $O_{object1}$ = {Position: $(x_{object1}, y_{object1})$, Velocity: $V_{object1}$, Acceleration: $a_{object1}$, Heading: $\theta_{object1}$, Intent: $I_{object1}$, PredictTrajectory: $Tr_{object1}$}, where "Predict Trajectory" indicates a predicted trajectory of the obstacle 1, that is, the obstacle 420, and "Intent" indicates a motion intent of the obstacle 1, that is, the obstacle 420.

A motion state $O_{object2}$ of the obstacle 2 (object2) 430 may be expressed as $O_{object2}$ = {Position: $(x_{object2}, y_{object2})$, Velocity: $V_{object2}$, Acceleration: $a_{object2}$, Heading: $\theta_{object2}$, Intent: $I_{object2}$, Predict Trajectory: $Tr_{object2}$}, where "Predict Trajectory" indicates a predicted trajectory of the obstacle 2, that is, the obstacle 430, and "Intent" indicates a motion intent of the obstacle 2, that is, the obstacle 430.

A motion state $O_{object3}$ of the obstacle 3 (object3) 440 may be expressed as $O_{object3}$ = {Position: $(x_{object3}, y_{object3})$, Velocity: $V_{object3}$, Acceleration: $a_{object3}$, Heading: $\theta_{object3}$, Intent: $I_{object3}$, Predict Trajectory: $Tr_{object3}$}, where "Predict Trajectory" indicates a predicted trajectory of the obstacle 3, that is, the obstacle 440, and "Intent" indicates a motion intent of the obstacle 3, that is, the obstacle 440.

A motion state $O_{object4}$ of the obstacle 4 (object4) 450 may be expressed as $O_{object4}$ = {Position: $(x_{object4}, y_{object4})$, Velocity: $V_{object4}$, Acceleration: $a_{object4}$, Heading: $\theta_{object4}$, Intent: $I_{object4}$, Predict Trajectory: $Tr_{object4}$}, where "Predict Trajectory" indicates a predicted trajectory of the obstacle 4, that is, the obstacle 450, and "Intent" indicates a motion intent of the obstacle 4, that is, the obstacle 450.

A motion state $O_{object5}$ of the obstacle 5 (object5) 460 may be expressed as $O_{object5}$ = {Position: $(x_{object5}, y_{object5})$, Velocity: $V_{object5}$, Acceleration: $a_{object5}$, Heading: $\theta_{object5}$, Intent: $I_{object5}$, Predict Trajectory: $Tr_{object5}$}, where "Predict Trajectory" indicates a predicted trajectory of the obstacle 5, that is, the obstacle 460, and "Intent" indicates a motion intent of the obstacle 5, that is, the obstacle 460.

A motion state $O_{object6}$ of the obstacle 6 (object6) 470 may be expressed as $O_{object6}$ = {Position: $(x_{object6}, y_{object6})$, Velocity: $V_{object6}$, Acceleration: $a_{object6}$, Heading: $\theta_{object6}$, Intent: $I_{object6}$, Predict Trajectory: $Tr_{object6}$}, where "Predict Trajectory" indicates a predicted trajectory of the obstacle 6, that is, the obstacle 470, and "Intent" indicates a motion intent of the obstacle 6, that is, the obstacle 470.

820: Determine, based on the motion states of the plurality of obstacles, a spatial-temporal occupy type corresponding to each of the plurality of obstacles. Specifically, there are the following two cases of a process of determining the spatial-temporal occupy type corresponding to each obstacle.

Case 1: If a motion state of the obstacle includes intent information of the obstacle, the spatial-temporal occupy type corresponding to the obstacle may be directly determined based on the intent information of the obstacle.

Optionally, an intent of the obstacle may be defined as {lane crossing intent, lane cut-in intent, lane forward-traveling intent, lane bypassing intent}. The lane crossing intent and the lane bypassing intent may correspond to a temporary spatial-temporal occupy type. The lane cut-in intent may correspond to a future long-term spatial-temporal occupy type. The lane forward-traveling intent may correspond to a current long-term spatial-temporal occupy type.

Therefore, $I_{object1}$ = the lane cut-in intent, and the obstacle 1, that is, the obstacle 420 belongs to the future long-term spatial-temporal occupy type; $I_{object2}$ = the lane crossing intent, and the obstacle 2, that is, the obstacle 430 belongs to the temporary occupy type; $I_{object3}$ = the lane crossing intent, and the obstacle 3, that is, the obstacle 440 belongs to the temporary occupy type; $I_{object4}$ = the lane forward-traveling intent, and the obstacle 4, that is, the obstacle 450 belongs to the current long-term occupy type; $I_{object5}$ = the lane forward-traveling intent, and the obstacle 5, that is, the obstacle 460 belongs to the current long-term occupy type; and $I_{object6}$ = the lane forward-traveling intent, and obstacle 6, that is, the obstacle 470 belongs to the current long-term occupy type.

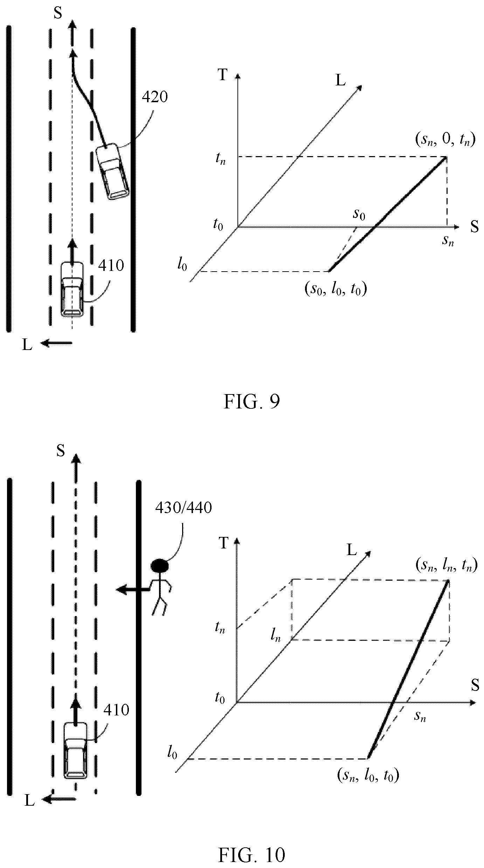

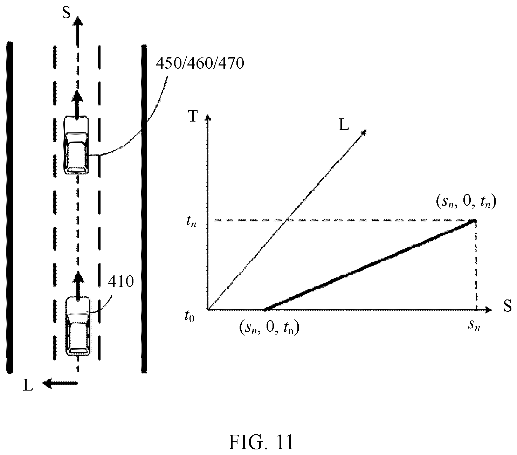

Case 2: If a motion state of the obstacle includes trajectory prediction information but does not include behavior intent information, the spatial-temporal occupy type corresponding to each obstacle may be determined through spatial projection calculation in this case. For specific projection calculation, refer to FIG. 9 to FIG. 11. It should be noted that, in coordinate systems shown in FIG. 9 to FIG. 11, a positive direction of an S-axis represents a direction in which the vehicle travels along a road, a positive direction of an L-axis represents a direction perpendicular to the S-axis, and a t-axis represents time. $S_0$, $L_0$, and $t_0$ are coordinate origins of the S-axis, the L-axis, and the t-axis respectively.

$(Tr_{object1}$, Path$) \rightarrow$ object1 belongs to the FO type.
$(Tr_{object2}$, Path$) \rightarrow$ object2 belongs to the TO type.
$(Tr_{object3}$, Path$) \rightarrow$ object3 belongs to the TO type.
$(Tr_{object4}$, Path$) \rightarrow$ object4 belongs to the CO type.
$(Tr_{object5}$, Path$) \rightarrow$ object5 belongs to the CO type.

$(Tr_{object6}, Path) \rightarrow$ object6 belongs to the CO type.

Based on the foregoing case 1 or case 2, it can be learned that a list of obstacles belonging to the future long-term occupy type is as follows: $FO_{list}$ = {object1}; a list of obstacles belonging to the temporary occupy type is as follows: $TO_{list}$ = {object2, object3}; and a list of obstacles belonging to the current long-term occupy type is as follows: $CO_{list}$ = {object4, object5, object6}.

830: Determine, based on a motion state of an obstacle of each spatial-temporal occupy type, a constraint condition corresponding to each spatial-temporal occupy type.

(1) Determine, based on a motion state of an obstacle belonging to the current long-term occupy type, a constraint condition corresponding to the current long-term occupy type.

The obstacle belonging to the current long-term occupy type is as follows: $CO_{list}$ = {object4, object5, object6}. A road coordinate system is constructed by using the travel path of the vehicle 410 as a reference line, and it is learned that coordinates of the obstacle 4, that is, the obstacle 450 in the coordinate system are $(s_{object4\_0}, l_{object4\_0})$, coordinates of the obstacle 5 450 in the coordinate system are $(s_{object5\_0}, l_{object5\_0})$, and coordinates of the obstacle 6, that is, the obstacle 470 in the coordinate system are $(s_{object6\_0}, l_{object6\_0})$. Because $s_{object4\_0} > s_{object5\_0} > s_{object6\_0}$, only the obstacle 4 and the obstacle 5 need to be considered for setting the constraint condition corresponding to the CO type, that is, a target obstacle corresponding to the CO type includes the obstacle 4 and the obstacle 5.

A position of the obstacle 4 in the road coordinate system within a planning time period may be expressed as $s_{object4} = v_{object4} \times t + s_{object4\_0}$, $(t \in [0, T])$, where $s_{object4\_0}$ indicates an initial position of the obstacle 4 in the road coordinate system at a collection moment, $v_{object4}$ indicates a velocity of the obstacle 4 at the collection moment, and T indicates a planning time. A position of the obstacle 5 in the road coordinate system within a planning time period may be expressed as $s_{object5} = v_{object5} \times t + s_{object5\_0}$, $(t \in [0, T])$, where $s_{object5\_0}$ indicates an initial position of the obstacle 5 in the road coordinate system at a collection moment, $v_{object5}$ indicates a velocity of the obstacle 5 at the collection moment, and T indicates a planning time.

Therefore, the constraint condition corresponding to the current long-term occupy type is as follows:

$$\begin{cases} s(t) < s_{\text{object}4}, t \in [0, T] \\ \text{and} \\ s(t) > s_{object5}, t \in [0, T] \end{cases}.$$

It should be noted that there may be one or two target obstacles corresponding to the CO type. This is not specifically limited in this embodiment of this application. Certainly, if motion states of two target obstacles are considered, this helps improve safety of planning of a longitudinal motion parameter of the vehicle. For example, in a vehicle following scenario, only a front vehicle is considered, and a vehicle in front of the front vehicle is not considered. In this case, there may be a problem that a travel velocity of a current vehicle cannot be handled in a timely manner when the vehicle in front of the front vehicle has an emergency.

(2) Determine, based on a motion state of an obstacle belonging to the future long-term occupy type, a constraint condition corresponding to the future long-term occupy type.

The obstacle belonging to the future long-term occupy type is as follows: $FO_{list}$ = {object1}. In addition, the obstacle 1 is an obstacle with a shortest TTL time from a lane in which the vehicle is located in the plurality of obstacles. Therefore, the obstacle 1 may be used as a target obstacle corresponding to the future long-term occupy type. A road coordinate system is constructed by using the travel path of the vehicle 410 as a reference line, and it is learned that coordinates of the obstacle 1 in the coordinate system are $(s_{object1\_0}, l_{object1\_0})$. Decomposition is performed in the road coordinate system based on a velocity of the obstacle 1, and a lateral velocity component $v_{object1\_lateral}$ of the obstacle 1 is obtained, and it is learned that a lateral distance between the obstacle 1 and a line on the right of the lane 1 is

$l_{dis\_to\_line} = l_{object1\_0} - \dfrac{W}{2}$, where $l_{object1\_0}$ indicates a longitudinal position of the obstacle 1 in the coordinate system at a collection moment, and W indicates a width of the lane 1. In this case, a longitudinal position of a cut-in point of the obstacle 1 in the coordinate system is $s_{object1} = s_{object1\_0} + v_{object1} \times ttl_{object1}$, and

$ttl_{object1} = \dfrac{l_{dis\_to\_line}}{v_{object1\_lateral}} = \dfrac{l_{object1} - W/2}{v_{object1\_lateral}}$, where $ttl_{object1}$ indicates a time at which the obstacle 1 crosses a side line of the lane 1.

Therefore, the constraint condition corresponding to the future long-term occupy type is

$$\begin{cases} s(t) < s_{object1}, t \in [0, \mathrm{T}] \\ \text{or} \\ s(t) > s_{object1}, t \in [ttl_{object1}, \mathrm{T}] \end{cases}$$ , where T indicates a planning time for a longitudinal motion parameter of the vehicle.

(3) Determine, based on a motion state of an obstacle belonging to the temporary occupy type, a constraint condition corresponding to the temporary occupy type.

The obstacle belonging to the temporary occupy type is as follows: $TO_{list}$ = {object2, object3}. The obstacle 2 is an obstacle with a shortest longitudinal distance from the vehicle in a road coordinate system, and the obstacle 3 is an obstacle with a shortest TTC from the vehicle in the plurality of obstacles. Therefore, the obstacle 2 and the obstacle 3 may be used as target obstacles corresponding to the temporary occupy type. A road coordinate system is constructed by using the travel path of the vehicle 410 as a reference line, and it is learned that coordinates of the obstacle 2 are ($s_{object2\_0}$, $l_{object2\_0}$), and coordinates of the obstacle 3 are ($s_{object3\_0}$, $l_{object3\_0}$). A longitudinal displacement of the obstacle 2 in the road coordinate system is $s_{object2} = v_{object2\_long} \times t + s_{object2\_0}$, ($t \in [t_{object2\_in}, t_{object2\_out}]$), where $v_{object2\_long}$ indicates a longitudinal velocity of the obstacle 2 along a travel path of the obstacle 2, $s_{object2\_0}$ indicates a longitudinal position of the obstacle 2 in the road coordinate system at a collection moment, $t_{object2\_in}$ indicates a moment at which the obstacle 2 enters the lane 1, and $t_{object2\_out}$ indicates a moment at which the obstacle 2 exits the lane 1. A longitudinal displacement of the obstacle 3 in the road coordinate system is $s_{object3} = v_{object3\_long} \times t + s_{object3\_0}$, ($t \in [t_{object3\_in}, t_{object3\_out}]$), where $v_{object3\_long}$ indicates a longitudinal velocity of the obstacle 3 along a travel path of the obstacle 3, $s_{object3\_0}$ indicates a longitudinal position of the obstacle 3 in the road coordinate system at a collection moment, $t_{object3\_in}$ indicates a moment at which the obstacle 3 enters the lane 1, and $t_{object3\_out}$ indicates a moment at which the obstacle 3 exits the lane 1.

Therefore, a TTC between the obstacle 2 and the vehicle may be expressed as follows:

$$ttc_{object2} = \left| \frac{s_{object2\_0} - s_{ego}}{v_{ego}} - t_{object2\_in} \right|$$ , where $s_{ego}$ indicates a longitudinal displacement of the vehicle in the road coordinate system at the collection moment, and $v_{ego}$ indicates a longitudinal velocity of the vehicle in the road coordinate system at the collection moment.

A TTC between the obstacle 3 and the vehicle may be expressed as follows:

$$ttc_{object3} = \left| \frac{s_{object3\_0} - s_{ego}}{v_{ego}} - t_{object3\_in} \right|$$ , where $s_{ego}$ indicates a longitudinal displacement of the vehicle in the road coordinate system at the collection moment, and $v_{ego}$ indicates a longitudinal velocity of the vehicle in the road coordinate system at the collection moment.

With reference to motion states of the foregoing two obstacles, it can be learned that the constraint condition of the TO type is as follows:

$$\begin{cases} s(t) < s_{object2}, t \in [t_{object2\_in}, t_{object2\_out}] \\ \text{or} \\ s(t) > s_{object3}, t \in [t_{object3\_in}, t_{object3\_out}] \\ \text{or} \\ s_{object2} < s(t) < s_{object3}, t \in [t_{object2\_in}, t_{object3\_out}] \end{cases}$$ .

840: Calculate a longitudinal motion parameter of the vehicle based on the constraint condition.

(1) Calculate a longitudinal motion parameter of the vehicle based on motion states of the target obstacles corresponding to the CO type. The target obstacles corresponding to the CO type are the obstacle 4 and the obstacle 5.

A longitudinal motion parameter of the vehicle with respect to the object4 is calculated as follows: *speedgoa-*

$$t_{object4} = \frac{s_{object4} - t_{HWT} \times v_{object4} - s_{ego}}{(v_{object4} + v_{ego})/2}$$

$l_{object4} = \{s_{object4} - t_{HWT} \times v_{object4}, t_{object4}, v_{object4}, a_{object4}\}$, and , where $t_{HWT}$ indicates a headway time parameter set by a system.

A longitudinal velocity target point corresponding to the object5 is calculated as follows: $speedgoal_{object5} =$

$$t_{object5} = \frac{s_{object5} - t_{HWT} \times v_{object5} - s_{ego}}{(v_{object5} + v_{ego})/2}$$

$\{s_{object5} - t_{HWT} \times v_{object5}, t_{object5}, v_{object5}, a_{object5}\}$, and , where $t_{HWT}$ indicates the headway time parameter set by the system.

Then whether the foregoing two longitudinal motion parameters of the vehicle are contradictory in time and space is determined, where a determining condition is $s_{object4} - t_{HWT} \times v_{object4} < s_{object5} - t_{HWT} \times v_{object5}$ and $t_{object4} < t_{object5}$. If the determining condition is not met, a longitudinal motion parameter with the smallest s of the two longitudinal motion parameters is used; or if the condition is met, the two longitudinal motion parameters are retained.

Finally, in ST (displacement-time) space, whether the retained longitudinal motion parameter meets the constraint condition corresponding to the FO type and the constraint condition corresponding to the TO type is determined through calculation. If the constraint condition corresponding to the FO type and the constraint condition corresponding to the TO type are met, the retained longitudinal motion parameter is used as a longitudinal motion parameter $speedgoal_{co}$ planned based on an obstacle of the CO type. If the constraint condition corresponding to the FO type and/or the constraint condition corresponding to the TO type is not met, one of the retained longitudinal motion parameter, a longitudinal motion parameter calculated based on an obstacle of the FO type, and a longitudinal motion parameter calculated based on the obstacle of the TO type, whichever has the smallest s, is used as an output.

(2) Calculate a longitudinal motion parameter of the vehicle based on a motion state of the target obstacle corresponding to the FO type. The target obstacle corresponding to the FO type is the obstacle 1.

There are two modes of longitudinal motion parameters for the obstacle 1: a radical longitudinal motion parameter and a conservative longitudinal motion parameter.

The radical longitudinal motion parameter is as follows: $speedgoal_{object1\_r} = \{s_{object1} + C, ttl_{object1}, v_{ego}, a_{ego}\}, (C > Length_{ego})$, where $Length_{ego}$ indicates a length of the vehicle 410, C is a constant, and $a_{ego}$ is a positive number.

The conservative longitudinal motion parameter is as follows: $speedgoal_{object1\_r} = \{s_{object1} - C, ttl_{object1}, v_{object1}, 0\}, (C > Length_{ego})$, where $Length_{ego}$ indicates the length of the vehicle 410, and C is a constant.

Finally, in ST (displacement-time) space, whether the foregoing two types of longitudinal motion parameters meet the constraint condition corresponding to the CO type and the constraint condition corresponding to the TO type is determined through calculation. If both types of longitudinal motion parameters meet the foregoing constraint conditions, the radical longitudinal motion parameter is used as a longitudinal motion parameter of the FO type. If only one type meets the foregoing constraint conditions, the longitudinal motion parameter meeting the foregoing constraint conditions is used as a longitudinal motion parameter of the FO type. If the constraint condition corresponding to the CO type and/or the constraint condition corresponding to FO type is not met, a longitudinal motion parameter, corresponding to a point with the smallest s, of the conservative longitudinal motion parameter, the longitudinal motion parameter of the CO type, and the longitudinal motion parameter of the TO type is used as an output.

(3) Calculate a longitudinal motion parameter of the vehicle based on motion states of the target obstacles corresponding to the TO type. The target obstacles corresponding to the TO type are the obstacle 2 and the obstacle 3.

A longitudinal motion parameter planned with respect to the obstacle 2 is as follows: $speedgoal_{object2} = \{s_{object2} - C, t_{object2\_in}, v_{object2\_long}, 0\}, (C > Length_{ego})$, where C is a constant, and $Length_{ego}$ indicates the length of the vehicle 410.

A longitudinal motion parameter planned with respect to the obstacle 3 is as follows: $speedgoal_{object3} = \{s_{object3} - C, t_{object3\_in}, v_{object3\_long}, 0\}, (C > Length_{ego})$, where C is a constant, and $Length_{ego}$ indicates the length of the vehicle 410.

Then whether the two longitudinal motion parameters are contradictory in time and space is determined, where a determining condition is $s_{object2} - C < s_{object3} - C$ and $t_{object2\_in} < t_{object3\_in}$. If the determining condition is not met, a longitudinal motion parameter with the smallest s of the two longitudinal motion parameters is used; or if the determining condition is met, the two longitudinal motion parameters are retained.

Finally, in ST (displacement-time) space, whether the retained longitudinal motion parameter meets the constraint condition of the FO type and the constraint condition corresponding to the CO type is determined through calculation. If both constraint conditions are met, the retained longitudinal motion parameter is used as a longitudinal motion parameter of the TO type. Otherwise, a longitudinal motion parameter, corresponding to the smallest s, of the retained longitudinal motion parameter, the longitudinal motion parameter corresponding to the FO type, and the longitudinal motion parameter corresponding to the CO type is used as an output.

850: Perform safety verification calculation on the output longitudinal motion parameter.

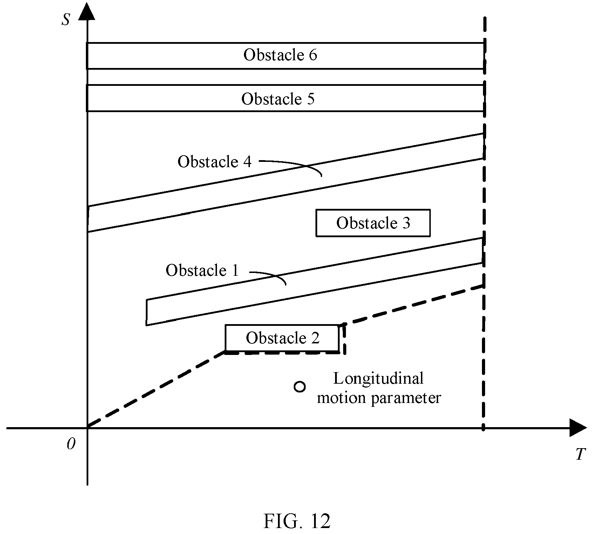

Collision risk verification is performed on calculation results of the foregoing modules to ensure safety of a final output result. The collision risk verification may be performing calculation and solution based on an ST graph (displacement-time graph). All target obstacles are projected into the ST graph, and it is determined whether reaching positions of the planned longitudinal motion parameters from a position of the vehicle 410 without collision with any target obstacle is possible. As shown in FIG. 12, provided that a longitudinal motion parameter falls within an interval enclosed by dashed lines, the longitudinal motion parameter is considered safe, and the verification succeeds.

The longitudinal motion parameter on which the verification succeeds is used as a state constraint to construct an objective function $s(t) = at^3 + bt^2 + ct + d$ . maxS(t), which is a boundary condition of S(t), meets the following condition constraint: s.t.$S''(t) \in [a_{min}, a_{max}]$. Then a correlation coefficient of an optimal objective function that meets each boundary condition is solved, to obtain a final longitudinal motion parameter:

$$v(\mathrm{t}) = s'(t) = 3at^2 + 2bt + c \ .$$

It should be noted that, in this embodiment, an objective optimization function is constructed by using a cubic polynomial, but the cubic polynomial does not constitute a limitation.

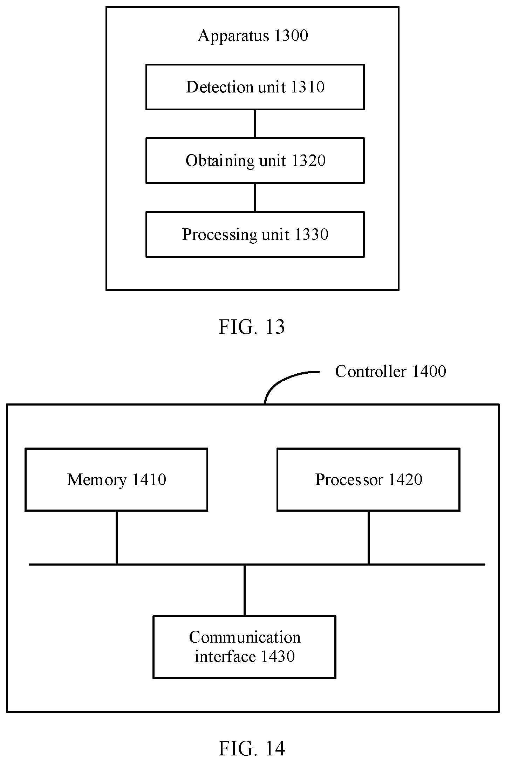

The foregoing describes, with reference to FIG. 1 to FIG. 12, the method for planning a longitudinal motion parameter of a vehicle in embodiments of this application. The following describes apparatuses of embodiments of this application with reference to FIG. 13 and FIG. 14. It should be understood that, it should be noted that the apparatuses shown in FIG. 13 and FIG. 14 may implement the steps in the foregoing methods. For brevity, details are not described herein again.

FIG. 13 is a schematic diagram of an apparatus for planning a longitudinal motion parameter of a vehicle according to an embodiment of this application, that is according to the invention. The apparatus 1300 shown in FIG. 13 includes a detection unit 1310, an obtaining unit 1320, and a processing unit 1320.

According to the invention, the detection unit 1310 is configured to detect a plurality of obstacles located within a preset range of the vehicle.

According to the invention, the obtaining unit 1320 is configured to obtain a time-space domain of each of the plurality of obstacles and a time-space domain of the vehicle, where the time-space domain of each obstacle is used to indicate a change of a position space of each obstacle with time, and the time-space domain of the vehicle is used to indicate a change of a position space occupied by the vehicle with time.

According to the invention, the processing unit 1330 is configured to determine a spatial-temporal occupy type between the time-space domain of each of the plurality of obstacles and the time-space domain of the vehicle based on an occupy time between the time-space domain of each of the plurality of obstacles and the time-space domain of the vehicle, where the occupy time is used to indicate a time period in which the position space of each of the plurality of obstacles occupies at least a part of a position of the vehicle.

According to the invention, the processing unit 1330 is further configured to select a target obstacle from the plurality of obstacles based on the spatial-temporal occupy type.

According to the invention, the processing unit 1330 is further configured to plan a longitudinal motion parameter of the vehicle based on a spatial-temporal occupy type corresponding to the target obstacle.

Optionally, in an embodiment, if the occupy time is a period of time whose starting moment is a collection moment, the time period corresponding to the occupy time is greater than a first time period threshold, and the collection moment is a moment at which the motion states of the plurality of obstacles are collected, the spatial-temporal occupy type between the time-space domain of each of the plurality of obstacles and the time-space domain of the vehicle is the current long-term occupy type;

if the time period corresponding to the occupy time is less than a second time period threshold, the spatial-temporal occupy type between the time-space domain of each of the plurality of obstacles and the time-space domain of the vehicle is the temporary occupy type; or

if the occupy time is a period of time later than the collection moment, and the time period corresponding to the occupy time is greater than a third time period threshold, the spatial-temporal occupy type between the time-space domain of each of the plurality of obstacles and the time-space domain of the vehicle is the future long-term occupy type, where the first time period threshold is greater than or equal to the second time period threshold, and the third time period threshold is greater than or equal to the second time period threshold.

Optionally, in an embodiment, if the spatial-temporal occupy type is the temporary occupy type, a distance between the target obstacle and the vehicle is shorter than a distance between another obstacle and the vehicle, where the another obstacle is an obstacle other than the target obstacle in the plurality of obstacles; or a time to collision TTC between the target obstacle and the vehicle is shorter than a TTC between the another obstacle and the vehicle.

Optionally, in an embodiment, if the spatial-temporal occupy type is the current long-term occupy type, a longitudinal distance between the target obstacle and the vehicle is less than a longitudinal distance between another obstacle in the plurality of obstacles and the vehicle.

Optionally, in an embodiment, if the spatial-temporal occupy type is the future long-term occupy type, a time to line TTL between the target obstacle and a lane in which the vehicle travels is shorter than a TTL between another obstacle and the lane, where the another obstacle is an obstacle other than the target obstacle in the plurality of obstacles.

Optionally, in an embodiment, the processing unit 1330 is further configured to: determine, based on the spatial-temporal occupy type corresponding to the target obstacle, a first constraint condition corresponding to the spatial-temporal occupy type of the target obstacle, where the first constraint condition is used to constrain the longitudinal motion parameter of the vehicle, to avoid collision between the target obstacle and the vehicle; obtain a second constraint condition corresponding to another spatial-temporal occupy type, where the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and plan the longitudinal motion parameter of the vehicle based on the first constraint condition and the second constraint condition.

In an optional embodiment, the detection unit 1310 and the obtaining unit 1320 may be a communication interface 1430, the processing unit 1330 may be a processor 1420, and the controller may further include a memory 1410, as specifically shown in FIG. 14.

FIG. 14 is a schematic block diagram of a controller according to another embodiment of this application. The controller 1400 shown in FIG. 14 may include the memory 1410, the processor 1420, and the communication interface 1430. The memory 1410, the processor 1420, and the communication interface 1430 are connected through an internal connection path. The memory 1410 is configured to store instructions. The processor 1420 is configured to execute the instructions stored in the memory 1420, to control the input/output interface 1430 to send/receive at least some parameters of a second channel model. Optionally, the memory 1410 may be coupled to the processor 1420 through an interface, or may be integrated with the processor 1420.

It should be noted that the communication interface 1430 uses a transceiver apparatus, for example, but not limited to, a transceiver, to implement communication between the communication device 1400 and another device or a communication network. The communication interface 1430 may further include an input/output interface (input/output interface).

In an implementation process, the steps in the foregoing method may be implemented by using a hardware integrated logical circuit in the processor 1420 or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1410, and the processor 1420 reads information in the memory 1410 and completes the steps in the foregoing methods in combination with hardware of the processor. To avoid repetition, details are not described herein again.

It should be understood that, the processor in embodiments of this application may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that in embodiments of this application, the memory may include a read-only memory and a random access memory, and provide instructions and data to the processor. A part of the processor may further include a nonvolatile random access memory. For example, the processor may further store information about a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. The independent claims define the invention and its scope of protection, with the dependent claims providing details on embodiments of the invention.

## Claims

1. A method for planning a longitudinal motion parameter of a vehicle, comprising:

   detecting (310) a plurality of obstacles located within a preset range of the vehicle;
   obtaining (320) a time-space domain of each of the plurality of obstacles and a time-space domain of the vehicle, wherein the time-space domain of each obstacle is used to indicate a change of a position space of each obstacle with time, and the time-space domain of the vehicle is used to indicate a change of a position space of the vehicle with time;
   **characterized by**
   determining (330) a spatial-temporal occupy type between the time-space domain of each of the plurality of obstacles and the time-space domain of the vehicle based on an occupy time between the time-space domain of each of the plurality of obstacles and the time-space domain of the vehicle, wherein the occupy time is used to indicate a time period in which the position space of each of the plurality of obstacles occupies at least a part of the position space of the vehicle;
   selecting (340) a target obstacle from the plurality of obstacles based on the spatial-temporal occupy type; and
   planning (350) a longitudinal motion parameter of the vehicle based on a spatial-temporal occupy type corresponding to the target obstacle.

2. The method according to claim 1, wherein if the occupy time is a period of time whose starting moment is a collection moment, the time period corresponding to the occupy time is greater than a first time period threshold, and the collection moment is a moment at which motion states of the plurality of obstacles are collected, the spatial-temporal occupy type between the time-space domain of each of the plurality of obstacles and the time-space domain of the vehicle is a current long-term occupy type;

if the time period corresponding to the occupy time is less than a second time period threshold, the spatial-temporal occupy type between the time-space domain of each of the plurality of obstacles and the time-space domain of the vehicle is a temporary occupy type; or

if the occupy time is a period of time later than the collection moment, and the time period corresponding to the occupy time is greater than a third time period threshold, the spatial-temporal occupy type between the time-space domain of each of the plurality of obstacles and the time-space domain of the vehicle is a future long-term occupy type, wherein

the first time period threshold is greater than or equal to the second time period threshold, and the third time period threshold is greater than or equal to the second time period threshold.

3. The method according to claim 2, wherein if the spatial-temporal occupy type is the temporary occupy type, a distance between the target obstacle and the vehicle is shorter than a distance between another obstacle and the vehicle, wherein the another obstacle is an obstacle other than the target obstacle in the plurality of obstacles; or a time to collision TTC between the target obstacle and the vehicle is shorter than a TTC between the another obstacle and the vehicle.

4. The method according to claim 2, wherein if the spatial-temporal occupy type is the current long-term occupy type, a longitudinal distance between the target obstacle and the vehicle is less than a longitudinal distance between another obstacle in the plurality of obstacles and the vehicle.

5. The method according to claim 2, wherein if the spatial-temporal occupy type is the future long-term occupy type, a time to line TTL between the target obstacle and a lane in which the vehicle travels is shorter than a TTL between another obstacle and the lane, and the another obstacle is an obstacle other than the target obstacle in the plurality of obstacles.

6. The method according to any one of claims 2 to 5, wherein the planning a longitudinal motion parameter of the vehicle based on a spatial-temporal occupy type corresponding to the target obstacle comprises:

determining, based on the spatial-temporal occupy type corresponding to the target obstacle, a first constraint condition corresponding to the spatial-temporal occupy type of the target obstacle, wherein the first constraint condition is used to constrain the longitudinal motion parameter of the vehicle, to avoid collision between the target obstacle and the vehicle;

obtaining a second constraint condition corresponding to another spatial-temporal occupy type, wherein the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and

planning the longitudinal motion parameter of the vehicle based on the first constraint condition and the second constraint condition.

7. An apparatus (1300) for planning a longitudinal motion parameter of a vehicle, comprising:

a detection unit (1310), configured to detect a plurality of obstacles located within a preset range of the vehicle;

an obtaining unit (1320), configured to obtain a time-space domain of each of the plurality of obstacles and a time-space domain of the vehicle, wherein the time-space domain of each obstacle is used to indicate a change of a position space of each obstacle with time, and the time-space domain of the vehicle is used to indicate a change of a position space of the vehicle with time;

**characterized by**

a processing unit (1330), configured to determine a spatial-temporal occupy type between the time-space domain of each of the plurality of obstacles and the time-space domain of the vehicle based on an occupy time between the time-space domain of each of the plurality of obstacles and the time-space domain of the vehicle, wherein the occupy time is used to indicate a time period in which the position space of each of the plurality of obstacles occupies at least a part of the position space of the vehicle, wherein

the processing unit (1330) is further configured to select a target obstacle from the plurality of obstacles based on the spatial-temporal occupy type; and

the processing unit (1330) is further configured to plan a longitudinal motion parameter of the vehicle based on a spatial-temporal occupy type corresponding to the target obstacle.

8. The apparatus according to claim 7, wherein if the occupy time is a period of time whose starting moment is a collection moment, the time period corresponding to the occupy time is greater than a first time period threshold, and the collection moment is a moment at which motion states of the plurality of obstacles are collected, the spatial-temporal occupy type between the time-space domain of each of the plurality of obstacles and the time-space domain of the vehicle is a current long-term occupy type;

if the time period corresponding to the occupy time is less than a second time period threshold, the spatial-temporal occupy type between the time-space domain of each of the plurality of obstacles and the time-space domain of the vehicle is a temporary occupy type; or
if the occupy time is a period of time later than the collection moment, and the time period corresponding to the occupy time is greater than a third time period threshold, the spatial-temporal occupy type between the time-space domain of each of the plurality of obstacles and the time-space domain of the vehicle is a future long-term occupy type, wherein
the first time period threshold is greater than or equal to the second time period threshold, and the third time period threshold is greater than or equal to the second time period threshold.

9. The apparatus according to claim 8, wherein if the spatial-temporal occupy type is the temporary occupy type, a distance between the target obstacle and the vehicle is shorter than a distance between another obstacle and the vehicle, wherein the another obstacle is an obstacle other than the target obstacle in the plurality of obstacles; or a time to collision TTC between the target obstacle and the vehicle is shorter than a TTC between the another obstacle and the vehicle.

10. The apparatus according to claim 8, wherein if the spatial-temporal occupy type is the current long-term occupy type, a longitudinal distance between the target obstacle and the vehicle is less than a longitudinal distance between another obstacle in the plurality of obstacles and the vehicle.

11. The apparatus according to claim 8, wherein if the spatial-temporal occupy type is the future long-term occupy type, a time to line TTL between the target obstacle and a lane in which the vehicle travels is shorter than a TTL between another obstacle and the lane, and the another obstacle is an obstacle other than the target obstacle in the plurality of obstacles.

12. The apparatus according to any one of claims 8 to 11, wherein the processing unit is further configured to:

determine, based on the spatial-temporal occupy type corresponding to the target obstacle, a first constraint condition corresponding to the spatial-temporal occupy type of the target obstacle, wherein the first constraint condition is used to constrain the longitudinal motion parameter of the vehicle, to avoid collision between the target obstacle and the vehicle;
obtain a second constraint condition corresponding to another spatial-temporal occupy type, wherein the another spatial-temporal occupy type is a spatial-temporal occupy type other than the spatial-temporal occupy type in a plurality of spatial-temporal occupy types, and the second constraint condition is used to constrain the longitudinal motion parameter of the vehicle, to avoid collision between the vehicle and an obstacle corresponding to the another spatial-temporal occupy type; and
plan the longitudinal motion parameter of the vehicle based on the first constraint condition and the second constraint condition.

13. A computer-readable medium, wherein the computer-readable medium stores program code, and when the computer program code is run on a computer, the computer is enabled to perform the method according to any one of claims 1 to 6.

14. A computer program product, wherein the computer program product includes computer program code, and when the computer program code is run on a computer, the computer is enabled to perform the method according to any one of claims 1 to 6.

**Patentansprüche**

1. Verfahren zum Planen eines Längsbewegungsparameters eines Fahrzeugs, umfassend:

Detektieren (310) einer Vielzahl von Hindernissen, die sich innerhalb einer voreingestellten Reichweite des Fahrzeugs befinden;

Erlangen (320) eines Zeit-Raumbereichs jedes der Vielzahl von Hindernissen und eines Zeit-Raumbereichs des Fahrzeugs, wobei der Zeit-Raumbereich jedes Hindernisses dazu verwendet wird, eine Änderung eines Positionsraums jedes Hindernisses mit der Zeit anzugeben, und der Zeit-Raumbereich des Fahrzeugs dazu verwendet wird, eine Änderung eines Positionsraums des Fahrzeugs mit der Zeit anzugeben;

**gekennzeichnet durch**

Bestimmen (330) einer räumlich-zeitlichen Besetzungsart zwischen dem Zeit-Raumbereich jedes der Vielzahl von Hindernissen und dem Zeit-Raumbereich des Fahrzeugs basierend auf einer Besetzungszeit zwischen dem Zeit-Raumbereich jedes der Vielzahl von Hindernissen und dem Zeit-Raumbereich des Fahrzeugs, wobei die Besetzungszeit dazu verwendet wird, einen Zeitraum anzugeben, in dem der Positionsraum jedes der Vielzahl von Hindernissen mindestens einen Teil des Positionsraums des Fahrzeugs besetzt;

Auswählen (340) eines Zielhindernisses aus der Vielzahl von Hindernissen basierend auf der räumlich-zeitlichen Besetzungsart; und

Planen (350) eines Längsbewegungsparameters des Fahrzeugs basierend auf einer räumlich-zeitlichen Besetzungsart, die dem Zielhindernis entspricht.

2. Verfahren nach Anspruch 1, wobei, wenn die Besetzungszeit ein Zeitraum ist, dessen Startzeitpunkt ein Sammelzeitpunkt ist, der Zeitraum, welcher der Besetzungszeit entspricht, größer als ein erster Zeitraumschwellenwert ist und der Sammelzeitpunkt ein Zeitpunkt ist, zu dem Bewegungszustände der Vielzahl von Hindernissen gesammelt werden, die räumlich-zeitliche Besetzungsart zwischen dem Zeit-Raumbereich jedes der Vielzahl von Hindernissen und dem Zeit-Raumbereich des Fahrzeugs eine aktuelle langfristige Besetzungsart ist;

wenn der Zeitraum, welcher der Besetzungszeit entspricht, kleiner als ein zweiter Zeitraumschwellenwert ist, die räumlich-zeitliche Besetzungsart zwischen dem Zeit-Raumbereich jedes der Vielzahl von Hindernissen und dem Zeit-Raumbereich des Fahrzeugs eine vorübergehende Besetzungsart ist; oder

wenn die Besetzungszeit ein späterer Zeitraum als der Sammelzeitpunkt ist und der Zeitraum, welcher der Besetzungszeit entspricht, größer als ein dritter Zeitraumschwellenwert ist, die räumlich-zeitliche Besetzungsart zwischen dem Zeit-Raumbereich jedes der Vielzahl von Hindernissen und dem Zeit-Raumbereich des Fahrzeugs eine künftige langfristige Besetzungsart ist, wobei

der erste Zeitraumschwellenwert größer oder gleich dem zweiten Zeitraumschwellenwert ist und der dritte Zeitraumschwellenwert größer oder gleich dem zweiten Zeitraumschwellenwert ist.

3. Verfahren nach Anspruch 2, wobei, wenn die räumlich-zeitliche Besetzungsart die vorübergehende Besetzungsart ist, ein Abstand zwischen dem Zielhindernis und dem Fahrzeug kürzer als ein Abstand zwischen einem anderen Hindernis und dem Fahrzeug ist, wobei das andere Hindernis ein anderes Hindernis als das Zielhindernis in der Vielzahl von Hindernissen ist; oder eine Zeit bis zu einer Kollision, TTC, zwischen dem Zielhindernis und dem Fahrzeug kürzer als eine TTC zwischen dem anderen Hindernis und dem Fahrzeug ist.

4. Verfahren nach Anspruch 2, wobei, wenn die räumlich-zeitliche Besetzungsart die aktuelle langfristige Besetzungsart ist, ein Längsabstand zwischen dem Zielhindernis und dem Fahrzeug kleiner als ein Längsabstand zwischen einem anderen Hindernis in der Vielzahl von Hindernissen und dem Fahrzeug ist.

5. Verfahren nach Anspruch 2, wobei, wenn die räumlich-zeitliche Besetzungsart die künftige langfristige Besetzungsart ist, eine Zeit bis zu einer Linie, TTL, zwischen dem Zielhindernis und einer Fahrspur, auf der das Fahrzeug fährt, kürzer als eine TTL zwischen einem anderen Hindernis und der Fahrspur ist und das andere Hindernis ein anderes Hindernis als das Zielhindernis in der Vielzahl von Hindernissen ist.

6. Verfahren nach einem der Ansprüche 2 bis 5, wobei das Planen eines Längsbewegungsparameters des Fahrzeugs basierend auf einer räumlich-zeitlichen Besetzungsart, die dem Zielhindernis entspricht, Folgendes umfasst:

Bestimmen, basierend auf der räumlich-zeitlichen Besetzungsart, die dem Zielhindernis entspricht, einer ersten Einschränkungsbedingung, die der räumlich-zeitlichen Besetzungsart des Zielhindernisses entspricht, wobei die erste Einschränkungsbedingung dazu verwendet wird, den Längsbewegungsparameter des Fahrzeugs einzuschränken, um eine Kollision zwischen dem Zielhindernis und dem Fahrzeug zu vermeiden;

Erlangen einer zweiten Einschränkungsbedingung, die einer anderen räumlich-zeitlichen Besetzungsart entspricht, wobei die andere räumlich-zeitliche Besetzungsart eine andere räumlich-zeitliche Besetzungsart als die räumlich-zeitliche Besetzungsart in einer Vielzahl von räumlich-zeitlichen Besetzungsarten ist und die zweite Einschränkungsbedingung dazu verwendet wird, den Längsbewegungsparameter des Fahrzeugs einzuschränken, um eine Kollision zwischen dem Fahrzeug und einem Hindernis, das der anderen räumlich-zeitlichen Besetzungsart entspricht, zu vermeiden; und

Planen des Längsbewegungsparameters des Fahrzeugs basierend auf der ersten Einschränkungsbedingung und der zweiten Einschränkungsbedingung.

7. Gerät (1300) zum Planen eines Längsbewegungsparameters eines Fahrzeugs, umfassend:

eine Detektionseinheit (1310), die dazu konfiguriert ist, eine Vielzahl von Hindernissen zu detektieren, die sich innerhalb einer voreingestellten Reichweite des Fahrzeugs befinden;

eine Erlangungseinheit (1320), die dazu konfiguriert ist, einen Zeit-Raumbereich jedes der Vielzahl von Hindernissen und einen Zeit-Raumbereich des Fahrzeugs zu erlangen, wobei der Zeit-Raumbereich jedes Hindernisses dazu verwendet wird, eine Änderung eines Positionsraums jedes Hindernisses mit der Zeit anzugeben, und der Zeit-Raumbereich des Fahrzeugs dazu verwendet wird, eine Änderung eines Positionsraums des Fahrzeugs mit der Zeit anzugeben;

**gekennzeichnet durch**

eine Verarbeitungseinheit (1330), die dazu konfiguriert ist, eine räumlich-zeitliche Besetzungsart zwischen dem Zeit-Raumbereich jedes der Vielzahl von Hindernissen und dem Zeit-Raumbereich des Fahrzeugs basierend auf einer Besetzungszeit zwischen dem Zeit-Raumbereich jedes der Vielzahl von Hindernissen und dem Zeit-Raumbereich des Fahrzeugs zu bestimmen, wobei die Besetzungszeit dazu verwendet wird, einen Zeitraum anzugeben, in dem der Positionsraum jedes der Vielzahl von Hindernissen mindestens einen Teil des Positionsraums des Fahrzeugs besetzt, wobei

die Verarbeitungseinheit (1330) ferner dazu konfiguriert ist, ein Zielhindernis aus der Vielzahl von Hindernissen basierend auf der räumlich-zeitlichen Besetzungsart auszuwählen; und

die Verarbeitungseinheit (1330) ferner dazu konfiguriert ist, einen Längsbewegungsparameter des Fahrzeugs basierend auf einer räumlich-zeitlichen Besetzungsart, die dem Zielhindernis entspricht, zu planen.

8. Gerät nach Anspruch 7, wobei, wenn die Besetzungszeit ein Zeitraum ist, dessen Startzeitpunkt ein Sammelzeitpunkt ist, der Zeitraum, welcher der Besetzungszeit entspricht, größer als ein erster Zeitraumschwellenwert ist und der Sammelzeitpunkt ein Zeitpunkt ist, zu dem Bewegungszustände der Vielzahl von Hindernissen gesammelt werden, die räumlich-zeitliche Besetzungsart zwischen dem Zeit-Raumbereich jedes der Vielzahl von Hindernissen und dem Zeit-Raumbereich des Fahrzeugs eine aktuelle langfristige Besetzungsart ist;

wenn der Zeitraum, welcher der Besetzungszeit entspricht, kleiner als ein zweiter Zeitraumschwellenwert ist, die räumlich-zeitliche Besetzungsart zwischen dem Zeit-Raumbereich jedes der Vielzahl von Hindernissen und dem Zeit-Raumbereich des Fahrzeugs eine vorübergehende Besetzungsart ist; oder

wenn die Besetzungszeit ein späterer Zeitraum als der Sammelzeitpunkt ist und der Zeitraum, welcher der Besetzungszeit entspricht, größer als ein dritter Zeitraumschwellenwert ist, die räumlich-zeitliche Besetzungsart zwischen dem Zeit-Raumbereich jedes der Vielzahl von Hindernissen und dem Zeit-Raumbereich des Fahrzeugs eine künftige langfristige Besetzungsart ist, wobei

der erste Zeitraumschwellenwert größer oder gleich dem zweiten Zeitraumschwellenwert ist und der dritte Zeitraumschwellenwert größer oder gleich dem zweiten Zeitraumschwellenwert ist.

9. Gerät nach Anspruch 8, wobei, wenn die räumlich-zeitliche Besetzungsart die vorübergehende Besetzungsart ist, ein Abstand zwischen dem Zielhindernis und dem Fahrzeug kürzer als ein Abstand zwischen einem anderen Hindernis und dem Fahrzeug ist, wobei das andere Hindernis ein anderes Hindernis als das Zielhindernis in der Vielzahl von Hindernissen ist; oder eine Zeit bis zu einer Kollision, TTC, zwischen dem Zielhindernis und dem Fahrzeug kürzer als eine TTC zwischen dem anderen Hindernis und dem Fahrzeug ist.

10. Gerät nach Anspruch 8, wobei, wenn die räumlich-zeitliche Besetzungsart die aktuelle langfristige Besetzungsart ist, ein Längsabstand zwischen dem Zielhindernis und dem Fahrzeug kleiner als ein Längsabstand zwischen einem anderen Hindernis in der Vielzahl von Hindernissen und dem Fahrzeug ist.

11. Gerät nach Anspruch 8, wobei, wenn die räumlich-zeitliche Besetzungsart die künftige langfristige Besetzungsart ist, eine Zeit bis zu einer Linie, TTL, zwischen dem Zielhindernis und einer Fahrspur, auf der das Fahrzeug fährt, kürzer als eine TTL zwischen einem anderen Hindernis und der Fahrspur ist und das andere Hindernis ein anderes Hindernis als das Zielhindernis in der Vielzahl von Hindernissen ist.

**12.** Gerät nach einem der Ansprüche 8 bis 11, wobei die Verarbeitungseinheit ferner zu Folgendem konfiguriert ist:

Bestimmen, basierend auf der räumlich-zeitlichen Besetzungsart, die dem Zielhindernis entspricht, einer ersten Einschränkungsbedingung, die der räumlich-zeitlichen Besetzungsart des Zielhindernisses entspricht, wobei die erste Einschränkungsbedingung dazu verwendet wird, den Längsbewegungsparameter des Fahrzeugs einzuschränken, um eine Kollision zwischen dem Zielhindernis und dem Fahrzeug zu vermeiden;

Erlangen einer zweiten Einschränkungsbedingung, die einer anderen räumlich-zeitlichen Besetzungsart entspricht, wobei die andere räumlich-zeitliche Besetzungsart eine andere räumlich-zeitliche Besetzungsart als die räumlich-zeitliche Besetzungsart in einer Vielzahl von räumlich-zeitlichen Besetzungsarten ist und die zweite Einschränkungsbedingung dazu verwendet wird, den Längsbewegungsparameter des Fahrzeugs einzuschränken, um eine Kollision zwischen dem Fahrzeug und einem Hindernis, das der anderen räumlich-zeitlichen Besetzungsart entspricht, zu vermeiden; und

Planen des Längsbewegungsparameters des Fahrzeugs basierend auf der ersten Einschränkungsbedingung und der zweiten Einschränkungsbedingung.

**13.** Computerlesbares Medium, wobei das computerlesbare Medium einen Programmcode speichert und, wenn der Computerprogrammcode auf einem Computer ausgeführt wird, es dem Computer ermöglicht wird, das Verfahren nach einem der Ansprüche 1 bis 6 durchzuführen.

**14.** Computerprogrammprodukt, wobei das Computerprogrammprodukt einen Computerprogrammcode beinhaltet und, wenn der Computerprogrammcode auf einem Computer ausgeführt wird, es dem Computer ermöglicht wird, das Verfahren nach einem der Ansprüche 1 bis 6 durchzuführen.

**Revendications**

**1.** Procédé de planification d'un paramètre de mouvement longitudinal d'un véhicule, comprenant :

la détection (310) d'une pluralité d'obstacles situés dans une plage prédéfinie du véhicule ;

l'obtention (320) d'un domaine espace-temps de chacun de la pluralité d'obstacles et d'un domaine espace-temps du véhicule, dans lequel le domaine espace-temps de chaque obstacle est utilisé pour indiquer un changement d'un espace de position de chaque obstacle avec le temps, et le domaine espace-temps du véhicule est utilisé pour indiquer un changement d'un espace de position du véhicule avec le temps ;

**caractérisé par**

la détermination (330) d'un type d'occupation spatio-temporelle entre le domaine spatio-temporel de chacun de la pluralité d'obstacles et le domaine spatio-temporel du véhicule sur la base d'un temps d'occupation entre le domaine spatio-temporel de chacun de la pluralité d'obstacles et le domaine spatio-temporel du véhicule, dans lequel le temps d'occupation est utilisé pour indiquer une période de temps pendant laquelle l'espace de position de chacun de la pluralité d'obstacles occupe au moins une partie de l'espace de position du véhicule ;

la sélection (340) d'un obstacle cible parmi la pluralité d'obstacles sur la base du type d'occupation spatio-temporelle ; et

la planification (350) d'un paramètre de mouvement longitudinal du véhicule sur la base d'un type d'occupation spatio-temporelle correspondant à l'obstacle cible.

**2.** Procédé selon la revendication 1, dans lequel si le temps d'occupation est une période de temps dont le moment de départ est un moment de collecte, la période de temps correspondant au temps d'occupation est supérieure à un premier seuil de période de temps, et le moment de collecte est un moment auquel les états de mouvement de la pluralité d'obstacles sont collectés, le type d'occupation spatio-temporelle entre le domaine spatio-temporel de chacun de la pluralité d'obstacles et le domaine spatio-temporel du véhicule est un type d'occupation actuelle à long terme ;

si la période de temps correspondant au temps d'occupation est inférieure à un deuxième seuil de période de temps, le type d'occupation spatio-temporelle entre le domaine spatio-temporel de chacun de la pluralité d'obstacles et le domaine spatio-temporel du véhicule est un type d'occupation temporaire ; ou

si le temps d'occupation est une période de temps postérieure au moment de collecte, et la période de temps correspondant au temps d'occupation est supérieure à un troisième seuil de période de temps, le type d'occupation spatio-temporelle entre le domaine spatio-temporel de chacun de la pluralité d'obstacles et le domaine spatio-temporel du véhicule est un type d'occupation future à long terme, dans lequel

le premier seuil de période de temps est supérieur ou égal au deuxième seuil de période de temps, et le troisième seuil de période de temps est supérieur ou égal au deuxième seuil de période de temps.

3. Procédé selon la revendication 2, dans lequel si le type d'occupation spatio-temporelle est le type d'occupation temporaire, une distance entre l'obstacle cible et le véhicule est plus courte qu'une distance entre un autre obstacle et le véhicule, dans lequel l'autre obstacle est un obstacle autre que l'obstacle cible dans la pluralité d'obstacles ; ou un temps avant collision TTC entre l'obstacle cible et le véhicule est plus court qu'un TTC entre l'autre obstacle et le véhicule.

4. Procédé selon la revendication 2, dans lequel si le type d'occupation spatio-temporelle est le type d'occupation actuelle à long terme, une distance longitudinale entre l'obstacle cible et le véhicule est inférieure à une distance longitudinale entre un autre obstacle dans la pluralité d'obstacles et le véhicule.

5. Procédé selon la revendication 2, dans lequel si le type d'occupation spatio-temporelle est le type d'occupation future à long terme, un temps avant la ligne TTL entre l'obstacle cible et une voie dans laquelle le véhicule se déplace est plus court qu'un TTL entre un autre obstacle et la voie, et l'autre obstacle est un obstacle autre que l'obstacle cible dans la pluralité d'obstacles.

6. Procédé selon l'une quelconque des revendications 2 à 5, dans lequel la planification d'un paramètre de mouvement longitudinal du véhicule sur la base d'un type d'occupation spatio-temporelle correspondant à l'obstacle cible comprend :

la détermination, sur la base du type d'occupation spatio-temporelle correspondant à l'obstacle cible, d'une première condition de contrainte correspondant au type d'occupation spatio-temporelle de l'obstacle cible, dans lequel la première condition de contrainte est utilisée pour contraindre le paramètre de mouvement longitudinal du véhicule, afin d'éviter une collision entre l'obstacle cible et le véhicule ;
l'obtention d'une seconde condition de contrainte correspondant à un autre type d'occupation spatio-temporelle, dans lequel l'autre type d'occupation spatio-temporelle est un type d'occupation spatio-temporelle autre que le type d'occupation spatio-temporelle dans une pluralité de types d'occupation spatio-temporelle, et la seconde condition de contrainte est utilisée pour contraindre le paramètre de mouvement longitudinal du véhicule, pour éviter une collision entre le véhicule et un obstacle correspondant à l'autre type d'occupation spatio-temporelle ; et
la planification du paramètre de mouvement longitudinal du véhicule sur la base de la première condition de contrainte et de la seconde condition de contrainte.

7. Appareil (1300) de planification d'un paramètre de mouvement longitudinal d'un véhicule, comprenant :

une unité de détection (1310), configurée pour détecter une pluralité d'obstacles situés dans une plage prédéfinie du véhicule ;
une unité d'obtention (1320), configurée pour obtenir un domaine espace-temps de chacun de la pluralité d'obstacles et un domaine espace-temps du véhicule, dans lequel le domaine espace-temps de chaque obstacle est utilisé pour indiquer un changement d'un espace de position de chaque obstacle avec le temps, et le domaine espace-temps du véhicule est utilisé pour indiquer un changement d'un espace de position du véhicule avec le temps ;
**caractérisé par**
une unité de traitement (1330), configurée pour déterminer un type d'occupation spatio-temporelle entre le domaine spatio-temporel de chacun de la pluralité d'obstacles et le domaine spatio-temporel du véhicule sur la base d'un temps d'occupation entre le domaine spatio-temporel de chacun de la pluralité d'obstacles et le domaine spatio-temporel du véhicule, dans lequel le temps d'occupation est utilisé pour indiquer une période de temps pendant laquelle l'espace de position de chacun de la pluralité d'obstacles occupe au moins une partie de l'espace de position du véhicule, dans lequel
l'unité de traitement (1330) est également configurée pour sélectionner un obstacle cible parmi la pluralité d'obstacles sur la base du type d'occupation spatio-temporelle ; et
l'unité de traitement (1330) est également configurée pour planifier un paramètre de mouvement longitudinal du véhicule sur la base d'un type d'occupation spatio-temporelle correspondant à l'obstacle cible.

8. Appareil selon la revendication 7, dans lequel si le temps d'occupation est une période de temps dont le moment de départ est un moment de collecte, la période de temps correspondant au temps d'occupation est supérieure à un premier seuil de période de temps, et le moment de collecte est un moment auquel les états de mouvement de la pluralité d'obstacles sont collectés, le type d'occupation spatio-temporelle entre le domaine spatio-temporel de chacun de la pluralité d'obstacles et le domaine spatio-temporel du véhicule est un type d'occupation actuelle à long terme ;

si la période de temps correspondant au temps d'occupation est inférieure à un deuxième seuil de période de temps, le type d'occupation spatio-temporelle entre le domaine spatio-temporel de chacun de la pluralité d'obstacles et le domaine spatio-temporel du véhicule est un type d'occupation temporaire ; ou

si le temps d'occupation est une période de temps postérieure au moment de collecte, et la période de temps correspondant au temps d'occupation est supérieure à un troisième seuil de période de temps, le type d'occupation spatio-temporelle entre le domaine spatio-temporel de chacun de la pluralité d'obstacles et le domaine spatio-temporel du véhicule est un type d'occupation future à long terme, dans lequel le premier seuil de période de temps est supérieur ou égal au deuxième seuil de période de temps, et le troisième seuil de période de temps est supérieur ou égal au deuxième seuil de période de temps.

9. Appareil selon la revendication 8, dans lequel si le type d'occupation spatio-temporelle est le type d'occupation temporaire, une distance entre l'obstacle cible et le véhicule est plus courte qu'une distance entre un autre obstacle et le véhicule, dans lequel l'autre obstacle est un obstacle autre que l'obstacle cible dans la pluralité d'obstacles ; ou un temps avant collision TTC entre l'obstacle cible et le véhicule est plus court qu'un TTC entre l'autre obstacle et le véhicule.

10. Appareil selon la revendication 8, dans lequel si le type d'occupation spatio-temporelle est le type d'occupation actuelle à long terme, une distance longitudinale entre l'obstacle cible et le véhicule est inférieure à une distance longitudinale entre un autre obstacle dans la pluralité d'obstacles et le véhicule.

11. Appareil selon la revendication 8, dans lequel si le type d'occupation spatio-temporelle est le type d'occupation future à long terme, un temps avant la ligne TTL entre l'obstacle cible et une voie dans laquelle le véhicule se déplace est plus court qu'un TTL entre un autre obstacle et la voie, et l'autre obstacle est un obstacle autre que l'obstacle cible dans la pluralité d'obstacles.

12. Appareil selon l'une quelconque des revendications 8 à 11, dans lequel l'unité de traitement est également configurée pour :

déterminer, sur la base du type d'occupation spatio-temporelle correspondant à l'obstacle cible, une première condition de contrainte correspondant au type d'occupation spatio-temporelle de l'obstacle cible, dans lequel la première condition de contrainte est utilisée pour contraindre le paramètre de mouvement longitudinal du véhicule, afin d'éviter une collision entre l'obstacle cible et le véhicule ;

obtenir une seconde condition de contrainte correspondant à un autre type d'occupation spatio-temporelle, dans lequel l'autre type d'occupation spatio-temporelle est un type d'occupation spatio-temporelle autre que le type d'occupation spatio-temporelle dans une pluralité de types d'occupation spatio-temporelle, et la seconde condition de contrainte est utilisée pour contraindre le paramètre de mouvement longitudinal du véhicule, pour éviter une collision entre le véhicule et un obstacle correspondant à l'autre type d'occupation spatio-temporelle ; et

planifier le paramètre de mouvement longitudinal du véhicule sur la base de la première condition de contrainte et de la seconde condition de contrainte.

13. Support lisible par ordinateur, dans lequel le support lisible par ordinateur stocke un code de programme, et lorsque le code de programme est exécuté sur un ordinateur, l'ordinateur est amené à réaliser le procédé selon l'une quelconque des revendications 1 à 6.

14. Produit de programme informatique, dans lequel le produit de programme informatique comporte un code de programme informatique, et lorsque le code de programme informatique est exécuté sur un ordinateur, l'ordinateur est amené à réaliser le procédé selon l'une quelconque des revendications 1 à 6.

Travel system 102

Engine 118

Transmission apparatus 120

Energy source 119

Wheel 121

Sensor system 104

Positioning system 122

Inertial measurement unit 124

Radar 126

Laser rangefinder 128

Camera 130

Control system 106

Steering system 132

Throttle 134

Braking unit 136

Computer vision system 140

Path control system 142

Obstacle avoidance system 144

Peripheral device 108

Wireless communication system 146

Vehicle-mounted computer 148

Microphone 150

Speaker 152

100

Processor 113

Instructions 115

Memory 114

Computer system 112

Power supply 110

User interface 116

EP 4 159 564 B1

FIG. 1

FIG. 2

EP 4 159 564 B1

| Detect a plurality of obstacles located within a preset range of a vehicle | 310 |

| Obtain a time-space domain of each of the plurality of obstacles and a time-space domain of the vehicle | 320 |

| Determine a spatial-temporal occupy type between the time-space domain of each of the plurality of obstacles and the time-space domain of the vehicle based on an occupy time between the time-space domain of each of the plurality of obstacles and the time-space domain of the vehicle | 330 |

| Select a target obstacle from the plurality of obstacles based on the spatial-temporal occupy type | 340 |

| Plan a longitudinal motion parameter of the vehicle based on a spatial-temporal occupy type corresponding to the target obstacle | 350 |

FIG. 3

FIG. 4

Start

510: Determine that a spatial-temporal occupy type corresponding to a target obstacle is a future longterm occupy type

540: Determine a constraint condition corresponding to a temporary occupy type

520: Determine a constraint condition corresponding to the future longterm occupy type

530: Determine a constraint condition corresponding to a current longterm occupy type

Calculate a longitudinal motion parameter of a vehicle

550

End

FIG. 5

```
                    ┌──────────────┐
                    │    Start     │
                    └──────┬───────┘
                           │
                           ▼
        ┌──────────────────────────────────┐
        │  610: Determine that a spatial-  │
        │      temporal occupy type        │
        │   corresponding to a target      │
        │  obstacle is a current longterm  │
        │          occupy type             │
        └────────────────┬─────────────────┘
                         │
                         ▼
┌──────────────┐ ┌──────────────────┐ ┌──────────────────┐
│640: Determine a│ │620: Determine a  │ │630: Determine a  │
│constraint      │ │constraint        │ │constraint        │
│condition       │ │condition         │ │condition         │
│corresponding to a│ │corresponding to the│ │corresponding to a│
│temporary occupy│ │current longterm  │ │future longterm   │
│type            │ │occupy type       │ │occupy type       │
└───────┬────────┘ └────────┬─────────┘ └────────┬─────────┘
        └──────────────┐    │    ┌──────────────┘
                       ▼    ▼    ▼
                  ┌──────────────────┐     650
                  │   Calculate a    │
                  │ longitudinal motion│
                  │ parameter of a vehicle│
                  └────────┬─────────┘
                           │
                           ▼
                    ┌──────────────┐
                    │     End      │
                    └──────────────┘
```

FIG. 6

FIG. 7

| Obtain a motion state of a vehicle 410 and motion states of a plurality of obstacles | 810 |

| Determine, based on the motion states of the plurality of obstacles, a spatial-temporal occupy type corresponding to each of the plurality of obstacles | 820 |

| Determine, based on a motion state of an obstacle of each spatial-temporal occupy type, a constraint condition corresponding to each spatial-temporal occupy type | 830 |

| Calculate a longitudinal motion parameter of the vehicle based on the constraint condition | 840 |

| Perform safety verification calculation on the output longitudinal motion parameter | 850 |

FIG. 8

FIG. 9

FIG. 10

FIG. 11

FIG. 12

EP 4 159 564 B1

Apparatus 1300

Detection unit 1310

Obtaining unit 1320

Processing unit 1330

FIG. 13

Controller 1400

Memory 1410

Processor 1420

Communication interface 1430

FIG. 14

43

**REFERENCES CITED IN THE DESCRIPTION**

**Patent documents cited in the description**

- CN 202010545611X

- US 2017369067 A1